# FASCICULE DE BREVET EUROPEEN

(11) **EP 2 247 187 B1**
(45) Date de publication et mention de la délivrance du brevet: **12.04.2017**
(21) Numéro de dépôt: 09713343.3
(22) Date de dépôt: 19.02.2009
(51) Int. Cl.: A23L 3/26, A21D 8/02, A21D 8/04, A21D 15/06

(54) **PROCÉDÉ DE FABRICATION DE PRODUITS DE BOULANGERIE DÉCONTAMINÉS, PRODUITS DE BOULANGERIE DÉCONTAMINÉS ET DISPOSITIF DE MISE EN OEUVRE DUDIT PROCÉDÉ**
VERFAHREN ZUR HERSTELLUNG DEKONTAMINIERTER BÄCKEREIWAREN, DEKONTAMINIERTE BÄCKEREIWAREN UND VORRICHTUNG ZUR UMSETZUNG DIESES VERFAHRENS
METHOD FOR MAKING DECONTAMINATED BAKERY PRODUCTS, DECONTAMINATED BAKERY PRODUCTS, AND DEVICE FOR IMPLEMENTING SAID METHOD

(30) Priorité: 19.02.2008 FR 0851074
(43) Date de publication de la demande: 10.11.2010
(73) Titulaire: Jacquet Panification, 63360 Saint Beauzire (FR)
(72) Inventeur: HELLABY, Elodie, F-63350 Saint-Laure (FR); THIAUDIERE, Jean-Luc, F-63200 Mozac (FR)
(74) Mandataire: Cabinet Plasseraud
(86) Numéro de dépôt international: PCT/EP2009/051993
(87) Numéro de publication internationale: WO 2009/103770

(56) Documents cités:
- WO-A-88/03369
- FR-A- 2 777 424
- GB-A- 2 339 134
- JP-A- 2001 252 061
- MIMOUNI ET AL: "Surface of foods and packaging treated by pulsed light; Aliments et emballages traités en surface par lumière pulsée" 1 mars 2002 (2002-03-01), TECHNIQUE DE L'INGÉNIEUR. AGROALIMENTAIRE, , XP009103930 ISSN: 1282-9064 le document en entier
- ELMNASSER N ET AL: "Pulsed-light system as a novel food decontamination technology: a review" CANADIAN JOURNAL OF MICROBIOLOGY, vol. 53, no. 7, juillet 2007 (2007-07), pages 813-821, XP002496349 ISSN: 0008-4166
- ANONYMOUS: 'Glucono delta lactone', [en ligne] 01 Février 2001, XP055211677 Extrait de l'Internet: <URL:http://www.pmpinc.com/documents/gdl-br ochure.pdf> [extrait le 2015-09-07]

## Description

### Domaine Technique

Le domaine de l'invention concerne la fabrication industrielle de produits de boulangerie frais ou semi-frais, cuits ou semi-cuits, et en particulier de pains classiques, de pains de mie ou analogues tels que des brioches, des viennoiseries ou des pâtisseries. Tous ces produits de boulangerie sont ci-après dénommés indifféremment "pain(s)" dans un souci de simplification.

Les produits de boulangerie industrielle visés sont ceux bénéficiant de longues durées de conservation et de bonnes qualités organoleptiques et nutritionnelles.

### Généralités- Art antérieur- Problème(s) technique(s)

Classiquement, la fabrication industrielle d'un pain comporte les étapes suivantes:
- Préparation de la pâte comprenant l'opération de mélange des ingrédients traditionnels, à savoir notamment la farine, l'eau, le sucre, la levure, les matières grasses et les additifs de panification; ainsi que les opérations de pétrissage, façonnage et boulage,
- Mise en forme de cette pâte, de préférence à l'aide d'un moule ("emmoulage"),
- Fermentation réalisée par exemple à 35°C et permettant, par exemple en 1h30, une augmentation du volume de la pâte selon un facteur multiplicateur, par exemple de trois,
- Cuisson dans des fours traditionnels de boulangerie (150 à 240 °C),
- Démoulage,
- Eventuel refroidissement,
- Eventuel tranchage,
- Conditionnement, de préférence en sachets à l'abri de l'air.

Dans ce type de fabrication industrielle, on cherche constamment à améliorer la qualité microbiologique des pains, pour des raisons évidentes d'hygiène, de santé publique et d'optimisation de la durée de conservation des pains industriels frais ou semi-frais. Ce souci va de pair avec celui du maintien des qualités organoleptiques et nutritionnelles de ces pains.

Cette quête de qualité passe tout d'abord par la maîtrise des risques de contamination des produits dès la sortie du four, et notamment par des mesures de traitement de l'air par filtration, de mise en surpression de l'enceinte de refroidissement et d'utilisation de matériel conçu pour satisfaire au mieux aux règles d'hygiène.

La lutte contre les contaminations microbiologiques qui affectent la conservation des pains passe également par le recours à des traitements de décontamination et /ou de préservation des pains.
La conservation des pains peut être caractérisée, entre autres, par la Durée Limite d'Utilisation Optimale -DLUO- (définie infra p.6)

Ces traitements connus et utilisés en industrie boulangère sont présentés ci-après.

### Méthodes chimiques de conservation des produits de boulangerie:

L'utilisation de conservateurs chimiques tels que l'acide sorbique ou le propionate de calcium, associée à une réduction de l'activité de l'eau des produits et à des pH les plus bas possibles (ajout d'acide lactique ou d'acide acétique) permet d'augmenter la conservation des produits boulangers. Cependant, l'utilisation de conservateurs pour limiter la croissance microbienne dans les pains va à l'encontre de la demande des consommateurs quant à la réduction des conservateurs dans les produits alimentaires.

La pulvérisation d'éthanol ou d'arôme(s) en solution éthanolique sur les pains pour inhiber ou réduire le taux de croissance des microorganismes est un moyen connu efficace et économique d'augmenter la durée de vie des produits boulangers. Mais des contraintes réglementaires se font jour de plus en plus, et de surcroît, l'alcool dans les produits alimentaires pose des problèmes nutritionnels (présence d'alcool dans le produit fini) ainsi que des problèmes de sécurité au travail (risque d'incendie et manipulation délicate).

### Méthodes physiques de conservation des produits de boulangerie:

L'emballage sous atmosphère modifiée (CO₂ et N₂) peut être utilisé pour augmenter la durée de vie des produits boulangers. Cependant, cette technique de conservation est contraignante au niveau de l'emballage car elle ne permet pas d'utiliser des emballages scellés. De plus, cette technique est dispendieuse car les films barrières et les mélanges gazeux utilisés ont un coût élevé.

Le traitement infrarouge (IR) permet de décontaminer la surface des produits de boulangerie. Toutefois, cette méthode présente deux limites majeures. La première est que les radiations IR induisent des modifications au niveau de la structure du pain, car elles provoquent une nouvelle cuisson du pain. La deuxième limite est d'ordre économique car les emballages adaptés à cette technologie sont coûteux.

Ces méthodes connues, qu'elles soient mises en oeuvre isolément ou combinées entre elles, ne suffisent pas à faire diminuer significativement par exemple les altérations de produits dues aux microorganismes, et notamment aux moisissures. Or, ces altérations causent des pertes économiques importantes et nuisent fortement à l'image de marque du fabricant auprès des consommateurs.

On connaît par ailleurs un procédé de décontamination et de stérilisation à froid de produits alimentaires en surface par lumière pulsée tel que décrit dans l'article "Mimouni A. 2000. Aliments et emballages traités en surface par lumière pulsée. Techniques de l'Ingénieur. Traité agroalimentaire F 3040. 6 p". En particulier, cet article divulgue l'effet de la lumière pulsée sur la conservation du pain précuit, conditionné en sachet plastique. Le système lumière pulsée utilise la technologie de la puissance pulsée pour détruire les micro-organismes en les soumettant à des flashs intenses de lumière. Pour cela, on emmagasine de l'énergie électrique dans un condensateur, puis on la transfère du condensateur à une lampe à enveloppe en quartz contenant un gaz inerte, le xénon. La lampe émet un flash intense de lumière qui est focalisé sur la surface de traitement par le réflecteur de la lampe. Celle-ci émet une lumière de longueurs d'onde comprises entre 200 nm dans l'ultraviolet et 1 mm dans le proche infrarouge. Le spectre de longueurs d'onde de la lumière émise par le soleil à la surface de la terre est en grande partie semblable à celui de la lumière émise par le procédé par lumière pulsée (jusqu'à 90 000 fois plus intense que le soleil). L'effet stérilisant de la lumière pulsée est dû au spectre UV, à des impulsions de courte durée (10⁻⁶ à 0,1 s) et à un pic d'énergie très élevé. Selon cet article, le traitement par lumière pulsée est efficace sur un certain nombre de produits alimentaires : pain précuit, produits de la mer, produits carnés, fruits, légumes et autres produits, qui montrent une réduction microbienne significative tout en préservant leurs qualités organoleptiques et nutritionnelles. Cependant, un tel traitement est perfectible en termes de performances de décontamination, en particulier au regard du niveau d'énergie reçue (fluence) requis pour détruire les microorganismes (rapport énergie / % de microorganismes détruits). Ce niveau d'énergie requis est bien entendu déterminant sur le plan économique. Il serait également appréciable d'avoir un spectre d'action de la lumière pulsée qui soit le plus large possible, s'agissant notamment des moisissures. Il a pu également être observé que la technologie lumière pulsée perd de son efficacité sur des produits tels que des pains cuits ou semi-cuits, qui possèdent des surfaces à traiter irrégulières ou qui présentent des aspérités. Ces surfaces ne sont en effet pas ou sont mal atteintes par l'énergie des flashs.

Le document de Elmnasser et Al "Pulsed-light system as a novel food decontamination technology : a review" décrit également l'utilisation de la lumière pulsée pour effectuer des décontaminations microbiennes et inactiver rapidement des micro-organismes pathogènes ou altérant des aliments. Le procédé de préservation des aliments implique l'utilisation d'impulsions lumineuses à large spectre, intenses et brèves. L'efficacité dudit procédé dépend de l'intensité de la lumière pulsée (J/cm²) et du nombre d'impulsions.

Tout comme le document de Mimouni, le document WO 88/03369 A décrit un procédé de stérilisation et d'inactivation de micro-organismes par application d'impulsions de courte durée, intenses et de lumière incohérente, continue, à large spectre et polychromatique sur des surfaces alimentaires et des matériaux d'emballage.

JP 2001 252061 A concerne un procédé de photostérilisation de champignons à la surface d'aliments tels que du pain. Ce procédé consiste à irradier de façon intermittente et répétée la surface alimentaire avec une radiation pulsée ne contenant pas de rayons UV inférieurs à 300 nm transmise ou à irradier la surface alimentaire au travers d'un emballage absorbant les rayons UV inférieurs à 300 nm.
Dans le domaine de la conservation des aliments sans affectation des propriétés organoleptiques, on connait également le brevet GB 2 339 134 A qui décrit une composition destinée à la panification, comprenant de la GDL, un agent levant et un agent conservateur. Cette composition a la particularité de diminuer le pH de la composition globale dans laquelle elle est intégrée, inhibant ainsi la croissance de microorganismes.

En outre, la demande de brevet FR-A-2894432 décrit un améliorant de panification comprenant un acide et/ou un sel d'acide (préferment acide : levain sec 2%) en combinaison avec de la glucono-delta-lactone (GDL 0,5%). Cette combinaison d'un levain sec et de GDL est présentée comme ayant un effet bénéfique sur les propriétés rhéologiques de la pâte mais également du produit de panification obtenu par cuisson de ladite pâte.

Le document FR 2 777 424 A concerne lui un levain panaire prêt à l'emploi appelé aussi levain tout point se conservant longuement à basse température et permettant l'obtention d'un pain se conservant plus longtemps.

### Objectifs de invention

Dans ce contexte, l'un des objectifs essentiels de la présente invention est de fournir un procédé alternatif performant permettant d'améliorer la qualité microbiologique des pains industriels, en détruisant la contamination, notamment fongique, de surface de ces produits, et ce sans affecter leurs qualités organoleptiques et nutritionnelles.

Un autre objectif essentiel de l'invention est de fournir un procédé de fabrication de produits de boulangerie décontaminés, en particulier de pains de mie ou analogues, exempt de conservateur(s) chimique(s) additionnels tels que ceux de la gamme E200.

Un autre objectif essentiel de l'invention est de fournir un procédé de fabrication de produits de boulangerie décontaminés, en particulier de pains de mie ou analogues, dont la DLUO est prolongée, de préférence supérieure ou égale à 20 jours, voire à 30 jours.

Un autre objectif essentiel de l'invention est de fournir un procédé de fabrication de produits de boulangerie décontaminés, en particulier de pains de mie ou analogues, ce procédé se devant d'être fiable, simple et économique.

Un autre objectif essentiel de l'invention est de fournir un procédé de fabrication de produits de boulangerie décontaminés, en particulier de pains de mie ou analogues, par mise en oeuvre de la technologie lumière pulsée, dans lequel les rayonnements lumineux atteignent de manière équivalente toute la surface du pain au moins partiellement cuit, même si celui-ci possède des surfaces à traiter irrégulières ou présentant des aspérités

Un autre objectif essentiel de l'invention est de fournir de nouveaux produits de boulangerie industriels décontaminés, en particulier de pains de mie ou analogues, dont la DLUO est prolongée, de préférence supérieure ou égale à 20 jours, voire à 30 jours et possédant de bonnes qualités organoleptiques et nutritionnelles, cette prolongation de DLUO étant avantageusement obtenue sans usage de conservateur chimique de la gamme E200 et/ou d'éthanol.

### Description succincte de l'invention

Ces objectifs, parmi d'autres sont atteints par la présente invention qui concerne tout d'abord un procédé industriel de fabrication de produits de boulangerie décontaminés, en particulier de pains de mie ou analogues, caractérisé en en ce qu'il comprend les étapes essentielles suivantes, de préférence successives:
(1) Préparation d'une pâte en mélangeant notamment les ingrédients suivants :
   A. farine;
   B. eau;
   C. éventuellement matière(s) grasse(s) ajoutée(s);
   D. au moins un agent de fermentation;
   E. NaCl (sel) ;
   F. éventuellement sucre(s) ;
   G. au moins un agent de charge choisi parmi les mono et/ou oligosaccharides hydrogénés, de préférence dans le groupe comprenant : le sorbitol, le mannitol, le xylitol, l'érythritol, le maltitol, le lactitol, l'isomaltulose hydrogéné et leurs mélanges, le maltitol étant préféré;
   H. au moins un améliorant de panification comprenant un acide et/ou sel d'acide et de la gluconodelta-lactone (GDL); ledit acide et/ou sel d'acide étant choisi dans le groupe comprenant les préferments acides, de préférence dans le sous-groupe comprenant les levains secs, les levains pâteux ou les levains liquides et leurs mélanges;
   I. éventuellement au moins un mélange hyposodé de minéraux, de préférence issu du lait;
   J. éventuellement un ou plusieurs additifs;
(2) Mise en forme de cette pâte, de préférence à l'aide d'un moule;
(3) Fermentation de cette pâte ainsi préparée;
(4) Cuisson au moins partielle de cette pâte mise en forme ;
(5) Eventuel refroidissement du pain;
(6) Décontamination du pain par traitement au moyen de lumière pulsée;
(7) Eventuel tranchage du pain ;
(8) Conditionnement, de préférence en sachets.

Selon un autre de ses aspects, l'invention concerne également un nouveau produit de boulangerie industriel décontaminé, en particulier un pain de mie ou analogue, de préférence obtenu par le procédé de fabrication tel que défini précédemment, caractérisé : en ce qu'il présente au moins l'une des caractéristiques suivantes:
a. il est exempt de conservateur(s) artificiel(s) de la gamme E200 tels qu'approuvés par l'union européenne,
b. il n'a pas été décontaminé par vaporisation à l'aide d'un liquide comprenant de l'éthanol,
et en ce que sa DLUO est supérieure ou égale à 20 jours, de préférence à 30 jours.

Selon un autre de ses aspects, l'invention concerne également un dispositif industriel de fabrication de produits de boulangerie décontaminés, en particulier de pains de mie ou analogues, adapté à la mise en oeuvre du procédé selon l'invention décrit ci-dessus, caractérisé en en ce qu'il comprend au moins un système à lumière pulsée de décontamination du pain, comprenant une ou plusieurs lampes apte(s) à produire, de préférence simultanément, au moins un flash.

### Description détaillée de l'invention

Il est du mérite des inventeurs d'avoir combiné la décontamination physique de surface par la lumière pulsée [étape (6)] aux ingrédients G-H, entre autres, dans ce procédé industriel de panification.

Il est à noter que la microflore des pains peut être de trois types :
a. La microflore bénéfique issue principalement du levain et qui permet que le phénomène de panification ait lieu ;
b. La microflore d'altération qui exerce des effets néfastes sur le pain et diminue sa durée de conservation;
c. La microflore pathogène qui peut être à l'origine d'infection ou de toxi-infection alimentaires;

La décontamination propre à l'invention a naturellement pour cibles spécifiques les microflores b et c.

### Définitions

Au sens du présent exposé, les termes "panification", "boulangerie" et "boulanger" doivent être interprétés de manière large comme se référant aux domaines de la boulangerie et de la viennoiserie, et en général au domaine de la production de produits cuits au four à partir de pâtes fermentées à base de farine de céréales.

Au sens du présent exposé, la DLUO renvoie par exemple à la définition donnée par la Direction Générale de la Consommation de la Concurrence et de la Répression des Fraudes (DGCCRF). Selon cette définition, la DLUO n'a pas le caractère impératif de la Date Limite de Consommation (DLC). Il s'agit juste d'une information pour le consommateur qui peut être assortie d'une indication des conditions de conservation, notamment de température dont le respect permet d'assurer la durabilité indiquée. La DLUO est annoncée par la mention "A consommer de préférence avant le...", suivie d'une indication fonction de la durabilité du produit :"jour et mois", "mois et année" ou "année". Une fois la date de DLUO passée, la denrée peut avoir perdu tout ou une partie de ses qualités spécifiques, sans pour autant constituer un danger pour celui qui l'absorberait. Tel est le cas, par exemple :
∘ du café qui, passé un certain délai, perd de son arôme;
∘ des aliments de diététique infantile, qui perdent de leur teneur en vitamines avec le temps.
Au sens de l'invention, la DLUO correspond au délai au-delà duquel les propriétés organoleptiques et nutritionnelles du produit de panification sont altérées, notamment par exemple, l'apparition en surface de colonies de levures ou moisissures, la texture de la mie dont les propriétés d'élasticité et de souplesse sont dégradées, l'apparition de goût désagréable comme le rance, l'arôme est également altéré...
En revanche, la DLC est une date limite impérative qui est apposée sur les denrées microbiologiquement périssables susceptibles après une courte période, de présenter un danger immédiat pour la santé humaine.

Au sens du présent exposé, l'expression "..produit de boulangerie (pain).. exempt de conservateur(s) artificiel(s) de la gamme E200" signifie par exemple que la quantité de conservateur(s) chimique(s) E200 ajouté(s) éventuellement présent(s) est si faible (traces) que le (ou les) E200 présent(s) est (sont) inactif(s) en termes d'augmentation de la DLUO. En d'autres termes, la concentration (exprimée en % boulanger) en conservateur(s) chimique(s) de la gamme E200 ajouté(s) dans le produit de boulangerie (pain) est e.g. inférieure ou égale à 0,1, de préférence à 0,01, et, plus préférentiellement encore à 0,001.

### Avantages

Le procédé selon l'invention présente, sur le plan technologique, une simplicité de mise en oeuvre et des coûts énergétiques très bas.

Suivant l'intensité du traitement, la combinaison [étape (6)] / ingrédients G-H permet de détruire un large spectre de microorganismes.

Les DLUO obtenues grâce à l'invention, sans conservateur chimique additionnel tels que ceux de la gamme E200, sont particulièrement remarquables.

L'étape (6) selon l'invention est une méthode de décontamination athermique permettant de préserver les qualités organoleptiques et nutritionnelles des aliments.

L'étape (6) selon l'invention est un traitement de courte durée, qui peut facilement s'intégrer dans une ligne de production.

De plus, l'appareillage produisant la lumière pulsée est un système compact et automatisé.

L'étape (6) selon l'invention est un procédé propre ne produisant aucun résidu (déchets, effluents, etc).

### Procédé selon l'invention

D'une manière particulièrement avantageuse, lors de l'étape (1), on met en oeuvre au moins l'une des caractéristiques quantitatives suivantes (les % donnés étant des % du boulanger : % en poids par rapport au poids de farine A):
**i.** 0 ≤ C ≤ 30, de préférence 1 ≤ C ≤ 25; et mieux encore 2 ≤ C ≤ 20;
**ii.** 0,1 ≤ G ≤ 10, de préférence 1 ≤ G ≤ 5; et mieux encore 2 ≤ G ≤ 4;
**iii.** 0,05 ≤ H ≤ 5, de préférence 0,1 ≤ H ≤ 4; et mieux encore 1 ≤ H ≤ 4;
**iv.** 0,05 ≤ I ≤ 5, de préférence 0,1 ≤ I ≤ 4; et mieux encore 0,15 ≤ I ≤ 3.

En boulangerie, il est courant d'exprimer les quantités des ingrédients présents dans la pâte en pourcentages dits "du boulanger". Le pourcentage du boulanger est une méthode de calcul dans laquelle la masse totale de farine présente dans la formule de la pâte boulangère, c'est-à-dire dans la pâte finale, représente toujours 100% et la masse des autres ingrédients est calculée par rapport à cette base de farine. Dans le calcul des pourcentages du boulanger, seule la farine au sens strict, en général de blé issue du moulin, est prise en compte comme quantité de farine ramenée à 100. La farine entrant dans la farine de céréales fermentée et composant le préferment acide, quelle que soit la céréale ou les céréales, n'est pas prise en compte dans le calcul, de même que le gluten de blé, qui est bien entendu du gluten vital. Sauf indication contraire, dans la description de l'invention ci-après, les quantités des ingrédients de la pâte boulangère sont exprimées en pourcentages du boulanger.

Les ingrédients A, B, D, E (obligatoires), F et J (facultatifs), sont des ingrédients de panification classiques qui sont mis en oeuvre dans des proportions également connues de l'homme de l'art.

S'agissant de la ou les matière(s) grasse(s) ajoutée(s) C, elle(s) est (sont) avantageusement choisie(s) dans le groupe comprenant l'huile de colza, l'huile de palme, le beurre, la margarine, l'huile de soja, le shortening et leurs mélanges.

De préférence, l'agent de fermentation D est choisi dans le groupe comprenant les levures, les levains et leurs mélanges.
Comme exemples de levures adaptées, on peut citer la levure de boulangerie pour pâte industrielle produite par multiplication cellulaire de *Saccharomyces cerevisiae* plus particulièrement destinée aux procédés de fabrication de pains de mie et de biscottes. Comme exemples de levains adaptés, on peut citer les levains secs, pâteux ou liquides.
Le (ou les) sucre(s) utilisé(s) (F) est (sont) du saccharose principalement mais il est également possible d'utiliser un sirop de glucose-fructose.
D'une manière remarquable, l'acide et/ou sel d'acide de l'améliorant de panification H est choisi dans le groupe comprenant:
→ les préferments acides, de préférence dans le sous-groupe comprenant les levains secs, les levains pâteux ou les levains liquides et leurs mélanges,
→ les acides alimentaires, de préférence dans le sous-groupe comprenant l'acide lactique, les sels d'acide lactique, l'acide acétique, les sels d'acide acétique, l'acide propionique, les sels d'acide propionique, l'acide benzoïque, les sels d'acide benzoïque, l'acide sorbique et les sels alimentaires d'acide sorbique, l'acide malique, les sels d'acide malique, l'acide citrique, les sels d'acide citrique, l'acide ascorbique, les sels d'acide ascorbique, l'acide alginique, les sels d'acide alginique et leurs mélanges;
→ et leurs mélanges.

Selon une forme préférée d'exécution de l'invention, l'améliorant de panification H est celui décrit dans la demande de brevet FR-A-2 894 432.

D'une manière avantageuse, le préferment acide de l'améliorant H peut être un levain sec. Le levain sec correspond à un produit sec obtenu par séchage d'une pâte fermentée au moyen de microorganismes appartenant aux bactéries des levains panaires et éventuellement de levures des levains panaires. Les bactéries des levains panaires sont notamment décrites dans le Chapitre 4.2 du livre de référence Handbuch Sauerteig - Biologie - Biochemie - Technologie par Spicher et Stephan, 4eme édition (ISBN 3-86022-076- 4). Le levain sec est également commercialisé sous les dénominations commerciales françaises : farine fermentée, farine fermentée déshydratée, farine préfermentée, levain déshydraté, sous les dénominations commerciales anglaises : dry ou dried sourdough, dry ou dried leaven ou levain, dry ou dried fermented flour, dry ou dried prefermented flour, sourdough concentrate, sourdough powder, et sour flour, et sous les dénominations allemandes Trockensauer et Sauerteigpulver. Le levain sec présent dans l'améliorant selon l'invention peut être issu d'une pâte fermentée comprenant une ou plusieurs farines de céréale(s), comprenant une ou plusieurs issue(s) de meunerie riche(s) en son ou comprenant une combinaison d'une ou plusieurs farine(s) de céréale(s) avec une ou plusieurs issue(s) de meunerie riche(s) en son, cette pâte pouvant contenir également des germes de céréales. De préférence, le levain sec est issu d'une pâte fermentée comprenant de la farine de blé et/ou de la farine de seigle, une ou plusieurs issue(s) de meunerie riche(s) en son provenant de blé et/ou une ou plusieurs issue(s) de meunerie riche(s) en son provenant de seigle ou une combinaison de farine(s) de blé et/ou de farine(s) de seigle avec une ou plusieurs issue(s) de meunerie riche(s) en son et provenant de blé et/ou de seigle. La pâte peut également contenir des germes de blé broyés.
Ces levains secs obtenus par déshydratation ou séchage ne contiennent plus de microorganismes actifs, mais ils contiennent encore une grande part des arômes formés pendant la fermentation du levain par les bactéries du levain et éventuellement aussi par les levures du levain, ces arômes étant principalement l'acide lactique, mais aussi les autres arômes de la fermentation du levain.
La dose d'acide lactique dans le levain sec est avantageusement supérieure ou égale à 50 g par kg de levain sec, et plus avantageusement d'au moins 70 g par kg de levain sec, et encore plus avantageusement d'au moins 100 g par kg de levain sec.
Selon une variante, le préferment acide de l'améliorant H peut être un levain liquide, comme par exemple un levain tel que décrit dans EP 0953 288 et WO 2004/080187.
Selon une forme d'exécution, le levain liquide de l'améliorant H consiste en un milieu de culture à base de farine contenant au moins une farine de céréale et de l'eau, ledit milieu de culture étant ensemencé et fermenté par une sélection de microorganismes qui peut comprendre de manière avantageuse des bactéries lactiques. Lesdits microorganismes sont capables de synthétiser un ou plusieurs acides choisis dans le groupe comprenant les acides organiques alimentaires, les sels alimentaires desdits acides et les combinaisons de ceux-ci, en particulier les combinaisons desdits acides, desdits sels organiques ou d'un ou plusieurs desdits acides avec un ou plusieurs desdits sels organiques. Dans le présent contexte, on désigne par milieu de culture à base de farine, un milieu de culture dont les matières sèches ont comme ingrédient principal une ou des farines de céréale. Le levain liquide selon l'invention contient au moins 7g/l d'acide acétique, et optionnellement de l'acide lactique. Le levain liquide suivant l'invention présente un pH entre 3,8 et 4,5.
Selon une autre variante, le levain liquide de l'améliorant H consiste en du lait ou ses dérivés fermentés par des micro-organismes et contenant des acides organiques et/ou leurs sels.
Selon une autre variante, le préferment acide de l'améliorant H peut être un levain pâteux. Un levain pâteux est par exemple un levain tel que défini au chapitre 10 dans le livre de Raymond Calvel " The taste of bread ", Aspen Publishers, Inc., Gaithersburg, Maryland, 2001, n ISBN : 0-8342-1646-9. L'améliorant H solide de panification comprenant un acide et/ou sel d'acide, de préférence un préferment acide, en combinaison avec de la glucono-delta-lactone, présente e.g. une teneur en matières sèches d'au moins 85% en masse. L'améliorant peut en particulier présenter une teneur en matières sèches supérieure ou égale à 90% en masse, et encore de préférence supérieure ou égale à 94% en masse. La forme préférentielle de l'améliorant H est la forme sèche. Selon une forme plus préférentielle, la forme sèche peut être pulvérulente ou en granules. La forme granulaire présente l'avantage d'être moins poussiéreuse et d'avoir une moindre tendance à se disperser dans l'air.
Le diamètre moyen des particules de l'améliorant est de préférence entre 50 pm et 300 pm, encore de préférence entre 80 pm et 150 pm et encore de préférence entre 80 pm et 120 pm.
Selon une forme d'exécution de l'invention, l'améliorant peut également être liquide, pâteux ou semi humide selon sa teneur en matières sèches.
Selon un mode préférentiel de la présente invention, le préferment acide est séparé de la GDL pendant sa conservation.
Un des moyens de séparation est le conditionnement séparé de la GDL. Dans ce cas, l'incorporation se fait soit simultanément en mélangeant la GDL avec le préferment acide préalablement à l'ajout dans le pétrin, soit séparément en ajoutant chacun des deux constituants à part.
Lorsque le préferment acide et la gluconodelta-lactone sont introduits séparés dans le temps, la période de temps séparant l'incorporation est adaptée pour que la GDL puisse agir sur les inconvénients rhéologiques du préferment acide.
Un autre moyen de séparation est d'encapsuler la GDL afin de maintenir ses propriétés fonctionnelles jusqu'à son intervention dans la pâte. Deux types de procédés d'encapsulation sont utilisables : les procédés physico-chimiques comme par exemple la coacervation, l'évaporation de solvant, les procédés mécaniques comme par exemple le lit d'air fluidisé, la nébulisation à chaud ou à froid, l'extrusion et la centrifugation. Tous les supports d'encapsulation compatibles en alimentaire sont envisageables pour l'encapsulation de la GDL, comme par exemple les glucides : maltodextrines, amidons modifiés, cyclodextrines, saccharose, cellulose... ; les gommes : extraits d'algues, gomme arabique, guar... ; les lipides : graisses végétales et animales hydrogénées ou non, cires, lécithines... ; les protéines : gélatine...
Selon un mode de réalisation particulièrement préféré, la technique d'enrobage en lit fluidisé est utilisée. Elle consiste à pulvériser un produit d'enrobage sur des particules solides fluidisées dans un courant d'air. Des produits d'enrobage très diversifiés peuvent être utilisés : dérivés de cellulose, dextrines, émulsifiants, des lipides, des dérivés de protéines, des amidons modifiés. Lorsque l'améliorant se présente sous forme liquide, pâteux ou semi humide, l'enrobage est non hydrosoluble, et la libération de la GDL se fait par une action mécanique lors du pétrissage de la pâte. Lorsque l'améliorant est sous la forme sèche, tous les supports d'encapsulation et d'enrobage sont envisageables.
De préférence, dans la présente invention, la GDL est utilisée entre 0,05 et 5%, encore de préférence entre 0,1 et 3% et encore de préférence entre 0,1 et 1,5% en pourcentages du boulanger.

De préférence, le mélange I de minéraux hyposodé, de préférence issu du lait, est plus préférablement encore choisi dans le groupe des mélanges minéraux hyposodiques obtenus par fractionnement du lait. De préférence, ledit mélange hyposodé de minéraux a la composition suivante :

| | |
|---|---|
| Protéines % | 10-15 |
| Cendres % | 80-88 |
| Minéraux | g/100g |
| Na | 8-12 |
| K | 27-30 |
| Cl | 40-45 |
| Ca | 2-3 |
| Mg | 0,2-0,4 |
| Humidité % | 3-5 |
| Lactose % | 5-10 |

Ledit mélange hyposodé de minéraux est utilisé avantageusement pour augmenter la durabilité du produit selon la présente invention.

Dans une forme tout particulièrement préférée, l'invention comprend en outre ledit mélange I, ceci permettant d'obtenir une DLUO optimale. En effet, le mode de réalisation préféré de l'invention, permettant d'obtenir des résultats particulièrement intéressants de DLUO, consiste à combiner une décontamination physique de surface par la lumière pulsée aux ingrédients G, H et I, entre autres, dans ce procédé industriel de panification.

Suivant une disposition intéressante de l'invention, le ou les additifs J est (sont) choisi(s) parmi les additifs d'amélioration du moelleux (de préférence émulsifiants, épaississants, hydrocolloïdes), les agents stabilisants; les additifs technologiques [de préférence les oxydants, les enzymes (avantageusement l'alpha amylase), les farines de céréales ou autres ingrédients caractéristiques de la composition de pains spéciaux, les agents réducteurs], les additifs de conservation microbiologique dans le groupe comprenant : l'acide ascorbique, la L-cystéine ou la levure désactivée, et leur mélanges. Comme exemples d'agents stabilisants-épaississants, on peut citer : la farine prégélatinisée, les amidons modifiés, la CMC (carboxyméthylcellulose), des gommes, comme par exemple la gomme de xanthane, des extraits d'algues comme des alginates ou des carraghénates.
Comme exemples d'émulsifiants, on peut citer : la lécithine, ou les mono- et diglycérides d'acides gras, ou les esters diacétyltartriques de mono- et diglycérides d'acides gras.
Comme exemples d'enzymes, on peut citer : des amylases, et en particulier des alpha-amylases, dont par exemple des alpha-amylases maltogènes ou d'autres alpha-amylases antirassissantes, des hémicellulases, et en particulier les xylanases, des glucoses oxydases, des amyloglucosidases, des phospholipases.
D'autres exemples d'additifs J sont le monochlorhydrate de L-cystéine, le chlorure de calcium, les oxydants et les réducteurs de la pâte.

L'étape (1) de préparation de la pâte comprend le pétrissage qui est une opération unitaire qui vise à mélanger le mélange des ingrédients A à J (entres autres) afin d'obtenir un mélange homogène. Le pétrissage de la pâte vise aussi à former une structure de type mousse (incorporation d'air dans la matrice). L'intensité du pétrissage augmente l'inclusion d'air ce qui préfigure la structure de la mie. Le pétrissage a aussi un rôle de texturation c'est-à-dire d'organisation, liaisons et entrecroisements entre les différents composants.

L'étape (2) de mise en forme comprend différentes opérations à savoir notamment et par exemple la division, le boulage, l'emmoulage.
La division vise à partager la pâte pétrie afin d'obtenir des pâtons de même masse.
L'ensemble de ces opérations se caractérise par la mise en forme des pâtons avant l'étape de fermentation. La mise en forme comprend par exemple successivement des phases actives de travail qui créent des tensions dans la pâte (boulage, laminage, pliage). A cela s'ajoutent des phases de repos (détente ou relaxation) qui permettent à la pâte de reprendre de la souplesse. Et pour finir la mise en forme, il y a l'étape de façonnage des pâtons.

L'étape (3) de fermentation est une opération importante dans le procédé de fabrication des pains. Lors de la fermentation, il faut distinguer les aspects microbiologiques (activités des levures et bactéries composant le levain) et les aspects biochimiques associés à la fermentation (amylolyse, mécanismes d'oxydation, formation de composés aromatiques, etc) et l'action de développement de la pâte, liée à la production et la rétention gazeuse ainsi qu'à la force de la pâte.
Le processus de fermentation s'effectue en deux temps :
- La préfermentation : période de première fermentation en masse qui a pour objectif de permettre la prise de force et l'amélioration de la structure de la pâte en favorisant la rétention des gaz. Son rôle est favorable au développement de composés aromatiques et à l'augmentation de l'acidité.
- Une période de deuxième fermentation qui se déroule après le façonnage, le but de cette deuxième fermentation est d'amener le pâton à un développement optimal avant la mise au four, tout en ayant une stabilité suffisante.
Suivant une variante, la fermentation (3) peut être activée par exposition de la pâte à une source de micro-ondes, avec une puissance d'émission telle que l'élévation de température induite au coeur de la pâte soit inférieure ou égale à la température d'inactivation de la levure, la température induite au coeur de la pâte pour cette activation aux micro-ondes étant de préférence, comprise entre 30°C et 50 °C, et, plus préférentiellement encore entre 36 et 42 °C, l'hygrométrie étant quant à elle de préférence comprise entre 60 et 99% HRE (Hygrométrie relative d'équilibre), et, plus préférentiellement encore entre 70 et 95 % HRE. Cette phase d'activation aux micro-ondes est avantageusement conduite simultanément à une fermentation traditionnelle dans une enceinte climatisée en température (25 à 50 °C, de préférence 30° à 42°C) et en hygrométrie (60 à 99% HRE, de préférence 70 à 95 % HRE). Avantageusement, la phase d'activation de la fermentation par exposition aux micro-ondes, peut permettre de réduire la durée de la phase de fermentation, par exemple, de 25% à 75 %. Par exemple, pour un pâton de masse comprise entre 600 et 700g, la durée Df de cette phase d'activation de la fermentation par exposition aux micro-ondes (exprimée en minutes) est comprise entre 10 et 50, de préférence entre 10 et 35, et plus préférentiellement encore entre 15 et 25.

La cuisson (4) résulte d'un échange de chaleur entre l'atmosphère du four à convection et le produit à cuire. Cette opération se caractérise par une expansion et une transformation physico-chimique de la pâte sous l'action de la chaleur. La cuisson améliore les qualités organoleptiques des pains et leur apporte une meilleure aptitude à la conservation ainsi qu'une meilleure digestibilité que les pâtes non cuites. La cuisson est une opération qui dure entre 30 et 38 minutes, la température de cuisson dans le four s'élève à 240°C - 260°C, ces paramètres permettent d'atteindre une température de 99°C au coeur du produit. L'humidité dans le four est de 35-41% afin de limiter la déshydratation des produits au cours de la cuisson. La cuisson doit être une opération bien maîtrisée pour assurer la formation d'une croûte de faible épaisseur et un niveau de déshydratation assez limité pour favoriser les caractéristiques de moelleux.
Suivant une variante, l'étape de cuisson (4) est réalisée au moins en partie à l'aide d'un four à micro-ondes, de préférence en faisant en sorte:
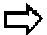 de mettre en oeuvre une puissance totale comprise entre 70 Wh/kg et 110 Wh/kg, préférentiellement comprise entre 75 et 85 Wh/kg,
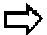 et, avantageusement, de mettre en oeuvre une phase 1 de cuisson de la pâte contenue dans le moule au moyen de micro-ondes avec une puissance nominale P1:
   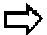 telle que la puissance d'émission Pe1 (exprimée en watts/min/gramme de pâte) soit comprise entre 10⁻³ et 10⁻¹, de préférence entre 1.10⁻² et 5,5.10⁻², et plus préférentiellement encore entre 1,5.10⁻² et 3.10⁻²
   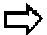 ou telle que la puissance d'émission Pe1 (exprimée en watts heure/kilogramme de pâte) soit comprise 10 Wh/kg et 40 Wh/kg, et plus préférentiellement encore entre 12 Wh/kg et 30 Wh/kg;
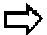 et de mettre en oeuvre ensuite une phase 2 de cuisson au moyen de micro-ondes avec une puissance nominale P2 :
   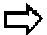 telle que la puissance d'émission Pe2 (exprimée en watts/min/gramme de pâte), soit comprise entre 10⁻³ et 10⁻¹, de préférence entre 1.10⁻² et 8,5.10⁻², et plus préférentiellement encore entre 1,5.10⁻² et 7.10⁻²;
   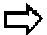 ou telle que la puissance d'émission Pe2 (exprimée en watts heure/kilogramme de pâte), soit comprise entre 30 Wh/kg et 100 Wh/kg, et plus préférentiellement encore entre 55 et 75 Wh/kg;
sachant par ailleurs que P1 ≤ P2.
Cette cuisson aux micro-ondes peut avantageusement être réalisée :
∘ soit en mode statique "batch" à l'aide d'un four à micro-ondes dans lequel les produits de boulangerie sont enfournés par lots et par séquences,
∘ soit en mode dynamique (continu) par exemple à l'aide d'un four micro-ondes à tunnel dans lequel les produits de boulangerie circulent à une vitesse donnée en continu grâce à des moyens de convoyage.
Dans le mode statique, la durée des phases de chauffage / cuisson est, avec la puissance émise, une variable importante.
Avantageusement en mode statique, la durée D1 de la phase 1 de chauffage/cuisson aux micro-ondes est inférieure ou égale à la durée D2 de la phase 2 de chauffage/cuisson aux micro-ondes.
Par exemple, pour un pâton de masse comprise entre 600 et 700g, la durée D1 de cette phase 1 de chauffage aux micro-ondes (exprimée en secondes) en mode statique est comprise entre 60 et 300, de préférence entre 20 et 90, plus préférentiellement entre 25 et 60, et plus préférentiellement encore entre 30 et 40, tandis que la durée D2 de cette phase de cuisson 2 exprimée en secondes étant comprise dans un ordre croissant de préférence : entre 30 et 180, entre 30 et 160, entre 30 et 150, entre 60 et 120, entre 65 et 120 et entre 60 et 90.
Dans le mode dynamique, la durée des phases de chauffage / cuisson est dépendante de la vitesse de convoyage des produits de boulangerie dans le four-tunnel.
Par ailleurs, toujours dans le mode dynamique, il est apparu préférable de jouer essentiellement sur la variable vitesse de convoyage et sur la variable puissance émise dans différentes zones successives du four-tunnel correspondant aux phases cuisson / chauffage pour contrôler le chauffage / cuisson des produits de boulangerie.
En mode dynamique, les durées de transit D1, D2 des produits de boulangerie dans les différentes zones successives du four-tunnel correspondant aux phases de cuisson / chauffage sont par exemple sensiblement du même ordre. C'est Pe qui varie dans ces zones.
La cuisson (4) aux micro-ondes peut comprendre une autre étape complémentaire intéressante, à savoir une phase 3 de cuisson, au moyen de micro-ondes avec une puissance d'émission Pe3:
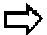 telle que la puissance d'émission Pe3 (exprimée en watts/min/gramme de pâte), comprise entre 10⁻³ et 10⁻¹, de préférence entre 1.10⁻² et 3.10⁻², et plus préférentiellement encore entre 1,5.10⁻² et 2,5.10⁻²;
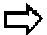 telle que la puissance d'émission Pe3 (exprimée en watts heure/kilogramme de pâte), comprise entre 15 Wh/kg et 75 Wh/kg, et préférentiellement encore entre 30 et 40 Wh/kg;
sachant par ailleurs que P1 ≤ P2 et de préférence Pe1 ≤ Pe2 ≤ Pe3.
La puissance nominale de consigne P3 peut être telle que P2 ≤ P3 ou P3 ≤ P2, de préférence P2 ≤ P3.
Dans tous les cas la somme des puissances émises par ces 3 phases de cuisson est avantageusement inférieure à la puissance totale comprise entre 70Wh/kg et 110Wh/kg préférentiellement entre 75 Wh/kg et 85 Wh/kg.

L'étape facultative de refroidissement (5) qui fait suite à la cuisson, est avantageusement précédée d'une autre étape facultative de démoulage (5').
Le démoulage permet un refroidissement plus rapide des pains. Le refroidissement s'effectue par exemple dans des tours de refroidissement où l'air est filtré. En pratique, les pains peuvent être placés dans la tour de refroidissement pendant e.g. 2 à 5 heures.
De préférence, l'étape (5) de refroidissement du pain amène la température du pain à 40°C au plus, de préférence à 20°C au plus.

Selon un mode préféré de mise en oeuvre, dans l'étape (6) de décontamination du pain par traitement au moyen de lumière pulsée, on soumet chaque pain à au moins un flash, de préférence un ou deux, produits par une ou plusieurs lampes, de telle sorte que le niveau d'énergie reçue par unité de surface (cm²) traitée de pain, soit supérieur ou égal à 0,5 J/cm², de préférence à 0,7 J/cm², et, plus préférentiellement encore, soit supérieur ou égal à 0,8 J/cm² et inférieur à 3,0 J/cm² ou bien encore compris entre 0,5 J/cm² et 5 J/cm². Des variations de mesure du niveau d'énergie peuvent exister en fonction de la sensibilité des appareils de mesure utilisés. Ceci est illustré par les exemples ci-dessous.
Le principe de la destruction des microorganismes est basé sur la synergie d'action entre l'effet photochimique (UV pulsé) et l'effet photothermique (température atteinte en instantané comprise entre 160°C et 200°C).
Les lampes flash (par exemple Xénon) utilisées pour produire la lumière pulsée sont des dispositifs qui émettent de grandes quantités d'énergie spectrale dans des impulsions de courte durée. L'énergie s'accumule dans un condensateur de stockage. Le condensateur est relié aux deux électrodes principales de la lampe flash, nommées anode et cathode. La tension de charge du condensateur est généralement inférieure à celle qui provoque l'ionisation du gaz xénon dans la lampe. L'énergie libérée et dissipée, forme un plasma xénon hautement excité dans la lampe flash. Le processus qui provoque l'ionisation initiale du gaz est appelé « déclenchement ». Le déclenchement crée un gradient de tension (volts/mm) dans le gaz d'amplitude suffisante pour provoquer l'ionisation. L'ionisation du gaz xénon provoque des rayonnements lumineux de forte intensité et couvrant une gamme spectrale étendue allant de l'ultraviolet à l'infrarouge. Ces rayonnements lorsqu'ils entrent en contact avec la surface à traiter vont avoir un effet germicide sur les microorganismes contaminant la surface.
Il existe plusieurs méthodes de déclenchement dont le mode simmer et le mode pseudo-simmer.
Dans le mode simmer, la lampe n'a besoin d'être déclenchée qu'une seule fois lors d'une séquence de flashs. Une alimentation séparée avec des caractéristiques de charge spécifiques a été conçue pour que le courant continue de s'écouler dans la lampe dans un état faible mais stable d'ionisation.
Le mode pseudo-simmer est une variante du mode simmer combinant l'alimentation simmer avec l'alimentation chargeant le condensateur. Les conditions de fonctionnement sont limitées par les considérations de la ligne de charge de la lampe et de l'alimentation.
Avantageusement, le rayonnement de haute énergie émis pour l'étape (6) est produit en mode "impulsionnel" sur une bande spectrale majoritairement comprise entre e.g. 180 et 1100 nm.
Suivant une forme d'exécution préférée, les pains traités à l'étape (6) circulent sur des moyens de convoyage et l'on fait en sorte qu'au moins l'une des dispositions suivantes soient mises en oeuvre pour l'étape (6):
→ l'espacement entre deux pains successifs est suffisant pour permettre aux lampes, après la production d'un ou plusieurs flashs pour un pain donné, d'être à nouveau opérationnelles pour la production d'un ou plusieurs flashs pour le pain suivant,
→ les pains sont tous positionnés sensiblement de la même façon par rapport aux lampes lorsqu'ils sont soumis au(x) flash(s).
En pratique, le traitement de l'étape (6) est réalisée par exemple dans un tunnel ou chambre de décontamination, qui permet d'isoler les pains soumis aux flashs de l'extérieur, et notamment des opérateurs pour des raisons évidentes de sécurité.
Il faut donc régler la vitesse du tapis de convoyage et la fréquence des flashs de manière à satisfaire aux dispositions opératoires sus-visées.
Suivant une modalité remarquable de l'invention, le pain peut reposer sur un support transparent à la lumière du ou des flashs, lorsqu'il est soumis au(x)dit(s) flash(s), et, par ailleurs, tout ou partie des lampes prévues sont disposées à moins de 10 cm, de préférence moins de 5 cm du pain.
En pratique et par exemple dans le cas où le pain est un pain de mie de forme générale sensiblement parallélépipédique, le traitement par lumière pulsée de l'étape (6) vise simultanément au moins 3 faces du pain (les deux faces latérales et la face supérieure).
Il est à noter que le procédé selon la présente invention permet d'obtenir des résultats très satisfaisants avec un nombre de flash limité (de préférence un à trois flashs) et des seuils de fluence nettement inférieurs à ceux pratiqués dans l'art antérieur.

L'étape (7) facultative est effectuée préférablement après la décontamination (6).

L'étape (8) de conditionnement comprend l'emballage par exemple dans des sachets plastiques protecteur, la mise en carton et la mise sur palette pour faciliter le transport.

### Produit selon l'invention

De manière surprenante et inattendue, la DLUO du produit de boulangerie industrielle selon l'invention peut en pratique être supérieure ou égale à 35 jours, et ce sans conservateur artificiel de type E200 de préférence, ni décontamination par pulvérisation de liquide à base d'éthanol, au moins sur tout ou partie de la surface dudit produit. Elle peut par exemple être comprise entre 35 et 50 jours.

Selon un mode avantageux de réalisation, le produit de boulangerie industrielle selon l'invention présente au moins l'une des caractéristiques microbiologiques CM1 à CM8 données dans le tableau ci-après:

| Caractéristiques Microbiologiques | Type de germe | Taux maximal admis | Méthode d'analyse |
|---|---|---|---|
| CM1 | Flore mésophile totale | ≤10⁵ UFC/g | NF V 08-100-01/01 |
| CM2 | E. Coli | ≤10 UFC/g | NF V 08/053 |
| CM3 | Coliformes thermo tolérants | ≤10 UFC/g | NF V 08-060- 03/96 |
| CM4 | Staphylocoques aureus | ≤100 UFC/g | NF V 08-057-1-01/04 |
| CM5 | Levures | ≤500 UFC/g | NF V08-036-05/03 |
| CM6 | Moisissures | ≤500 UFC/g | NFV08-036-05/03 |
| CM7 | Pichia anomala | ≤100 UFC/g | Identification avec galeries Vitek/Api puis NF V08-036-05/03 |
| CM8 | Salmonelles | Absence dans 25g | SMS AES 10/4-05/04 |

Les germes que l'on recherche lors de ces analyses sont naturellement présents sur les sites de productions, dans l'atmosphère, dans les ingrédients...
L'acronyme UFC signifie Unité Formant Colonie.
Les méthodes d'analyses sont conformes à des normes NF (Normes Françaises) et SMS (Simple Method for Salmonella) ci-dessus identifiées.

De préférence, le produit de boulangerie industrielle selon l'invention, d'une part, comprend au moins un agent de charge choisi parmi les mono et/ou oligosaccharides hydrogénés, de préférence dans le groupe comprenant : le sorbitol, le mannitol, le xylitol, l'érythritol, le maltitol, le lactitol, l'isomaltulose hydrogéné et leurs mélanges, le maltitol étant préféré et au moins un améliorant de panification comprenant un acide et/ou sel d'acide et de la gluconodelta-lactone (GDL), et, d'autre part, est décontaminé par traitement au moyen de lumière pulsée.

De préférence, le produit de boulangerie industrielle selon l'invention présente tout ou partie des propriétés suivantes:
- moelleux : satisfaisant
- aspect visuel : produit ne présentant pas de développement microbien, avec une croûte typique des produits de panification
- texture : mie fine et régulière, moelleuse et non friable
- odeur : caractéristique d'un produit de panification, sans odeur étrangère
- goût : caractéristique d'un produit de panification, absence de goût étranger.

De manière plus préférée encore, le produit de boulangerie industrielle selon l'invention est caractérisé en ce qu'il comprend les ingrédients suivants:
A. farine;
B. eau;
C. éventuellement matière(s) grasse(s) ajoutée(s);
D. au moins un agent de fermentation;
E. NaCl (sel) ;
F. éventuellement sucre (saccharose) ;
G. au moins un agent de charge choisi parmi les mono et/ou oligosaccharides hydrogénés, de préférence dans le groupe comprenant : le sorbitol, le mannitol, le xylitol, l'érythritol, le maltitol, le lactitol, l'isomaltulose hydrogéné et leurs mélanges, le maltitol étant préféré;
H. au moins un améliorant de panification comprenant un acide et/ou sel d'acide et de la gluconodelta-lactone (GDL);
I. éventuellement au moins un mélange hyposodé de minéraux, de préférence issu du lait;
J. éventuellement un ou plusieurs additifs.

Le produit de boulangerie industrielle selon l'invention est de préférence obtenu par le procédé selon l'invention. Dans une variante de réalisation préféré, le produit de boulangerie industrielle selon l'invention comprend au moins les ingrédients G, H et I précités.

### Dispositif selon l'invention

L'invention vise également un dispositif industriel de fabrication de produits de boulangerie décontaminés, en particulier de pains de mie ou analogues, adapté notamment à la mise en oeuvre du procédé selon l'invention caractérisé en ce qu'il comprend au moins un système à lumière pulsée de décontamination du pain, comportant une ou plusieurs lampes apte(s) à produire, de préférence simultanément, au moins un flash.

De préférence, tout ou partie des lampes prévues sont avantageusement disposées à moins de 10 cm, de préférence moins de 5 cm du pain.

En outre, ce système à lumière pulsée de décontamination du pain peut comporter au moins un support transparent à la lumière du ou des flashs et sur lequel repose le pain lorsqu'il est soumis au(x)dit(s) flash(s). Cette disposition permet notamment, dans le cas où le pain a une forme générale parallélépipédique, de traiter au moins trois faces du pain. Suivant une autre particularité intéressante de l'invention, le système utilisé pour le traitement de surface par lumière pulsée est composé de deux sous-ensembles : un tunnel ou une chambre de traitement et l'armoire de puissance.
Le tunnel ou la chambre de traitement s'insère avantageusement dans une chaîne industrielle de fabrication de pains. Ce tunnel ou cette chambre conçue pour être étanche à la lumière, est composée par exemple de
→ une à dix lampes réparties uniformément à la périphérie de la chambre,
→ un tube en quartz,
→ des réflecteurs en aluminium,
→ un support en quartz sur lequel sont placés les produits à traiter.
L'armoire de puissance contient les composants servant à produire des pulsations électriques de hautes intensité et tension afin de générer le rendement de lumière des lampes réparties dans le sas de décontamination. L'armoire de puissance contient e.g.:
→ une à dix alimentations électriques,
→ un à dix condensateurs,
→ une unité de distribution électrique.

### Description des figures

La figure 1 annexée représente schématiquement en vue de face la répartition des lampes dans la chambre du système à lumière pulsée.
La figure 2 donne la courbe du pourcentage de pains de mie nature avec conservateur chimique (à savoir le propionate de calcium -PPC-) ayant moisi au cours du temps.
La figure 3 donne la courbe du pourcentage de pains de mie nature sans conservateur chimique ayant moisi au cours du temps.
La figure 4 donne la courbe du pourcentage de pains de mie froment non traités ayant moisi au cours du temps.
La figure 5 donne la courbe du pourcentage de pains de mie traités par lumière pulsée ayant moisi au cours du temps.
La figure 6 est un schéma montrant les 3 positions des 9 bio-indicateurs déposés sur les 3 faces des pains de mie pour la validation biologique après traitement selon l'invention.

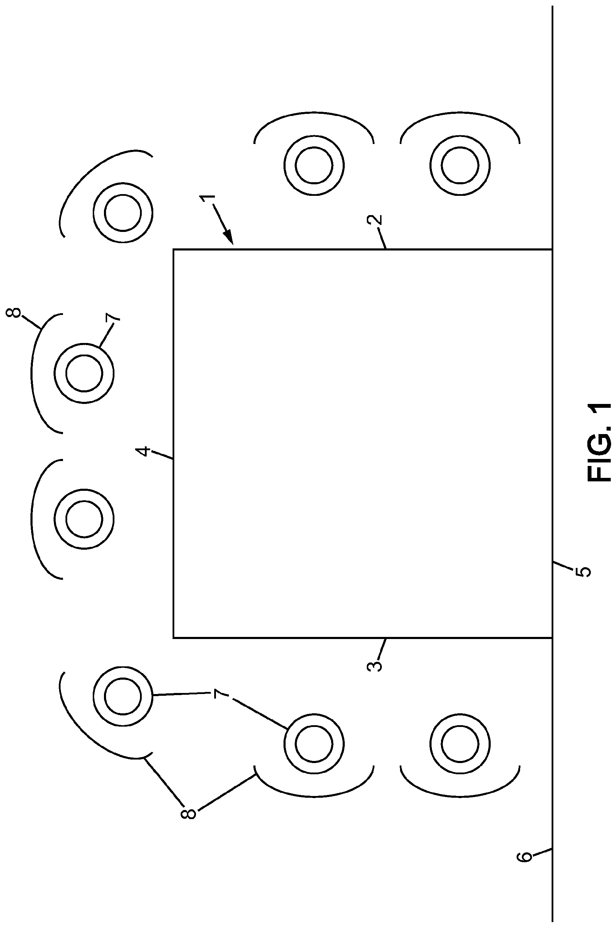

La figure 1 annexée représente schématiquement en vue de face la répartition des lampes dans la chambre du système à lumière pulsée. Cette figure montre de face un pain de mie 1 parallélépipédique comprenant deux faces latérales 2,3, une face supérieure 4 et une face inférieure 5 reposant sur un support 6 (par exemple transparent en quartz). Huit lampes 7, associée chacune à un réflecteur 8, sont réparties uniformément en regard des faces latérales 2,3 et supérieure 4. Deux ensembles lampes 7 /réflecteurs 8 superposés sont disposés de manière à illuminer chacune des faces latérales 2,3, tandis que quatre ensembles lampes 7 /réflecteurs 8 sont disposés côte à côte de manière à illuminer la face supérieure 4. Les ensembles lampes 7 /réflecteurs 8 sont par ailleurs de préférence sensiblement disposés dans un même plan perpendiculaire au support 6 et transversal par rapport au pain 1. Quel que soit le mode de traitement statique ou dynamique, il est préférable que les flashs se produisent lorsque le plan transversal médian du pain 1 est sensiblement confondu avec le plan comprenant les ensembles lampes 7 /réflecteurs 8.
Le système à lumière pulsée peut par exemple présenter les caractéristiques et les performances suivantes:
→ Fluence : 1 à 2,5 J/cm²;
→ Fréquence maximale d'impulsion : 1,5 Hz;
→ Durée impulsion à 30% : 0,4-0,6 msecondes;
→ Longueur de l'arc : 500 nm
→ Gaz Xénon
→ Refroidissement Air forcé
Les exemples qui suivent permettent de mieux comprendre le rôle de l'invention et illustrent des exemples de réalisation du procédé selon l'invention.

### EXEMPLES

Les pâtes utilisées dans les exemples qui suivent, ont les compositions suivantes :

**TABLEAU 1**

| Ingrédients | Recette Témoin | Recette selon l'invention sans conservateur chimique |
|---|---|---|
| -A- Farine de blé | 100 | 100 |
| -B- Eau | 55 | 55 |
| -C- Huile de palme | 3 | 5 |
| -D- Levure de boulanger | 4 | 4 |
| -E- Sel (NaCl) | 2,2 | 2 |
| -F- Sucre (saccharose) | 2 | 5 |
| -G- Maltitol | 2 | 3 |
| -H- Levain sec d'acide tel que décrit tel que décrit dans EP 0953 288 et WO 2004/080187 et GDL | | 3 |
| -I- Mélange hyposodé de minéraux décrit en page 12 de la présente demande de brevet | | 0,2 |
| PPC | 0,6 | |
| Améliorant de panification : farine de blé, acide ascorbique : 1,5% | 0,25 | 0,25 |

Des pains de mie recette témoin et recette selon l'invention sans conservateurs chimiques ajoutés sont produits en laboratoire. Ces pains ont été produits dans des moules puis coupés et mis en sac. Certains pains sont contaminés par vaporisation manuelle de spores d'*Aspergillus flavus* et en utilisant un cache ayant une ouverture de 6cm x 6cm. Les pains contaminés sont traités par lumière pulsée le lendemain de leur contamination. Tous les produits témoins et essais, contaminés ou non, sont mis en suivi de conservation à 30°C. Durée de vie minimale espérée : 30J (jours) pour des produits traités.
La préparation de cette pâte comprend les étapes suivantes :
- Pétrissage en pétrin de type "spirale" 4 mn vitesse lente plus 10 mn vitesse rapide,
- Façonnage sous forme de quenelle de 30 cm de long et mise en moule,
- Fermentation dans une étuve climatisée (hygrométrie 85 % et température 35°C).
Le moule mis en oeuvre est de forme parallélépipédique et de dimensions : 300 mm de long en haut, 285 mm en bas; 85 mm de hauteur, largeur 10 cm en bas et 11 cm en haut.
La quantité de pâte par moule est de 660g.
Le matériel mis en oeuvre pour la cuisson est un four classique de type canadien.
Le système à lumière pulsée utilisé est représenté sur la figure 1 annexée.
Tous les pains ont été traités hors de leur sac, celui-ci filtrant trop le rayonnement et créant des zones d'ombre.
Les fluences mesurées à la surface des pains à l'aide d'un joule-mètre sont comprises entre 0,9 et 4,7 J/cm². La fluence peut être mesurée sur chaque lampe séparément et les valeurs obtenues après 3 flashs successifs sont données dans le tableau 2 ci-dessous :

**TABLEAU 2**

| Mesures fluence sur lampe supérieure (J/cm²) | | Mesures fluence sur lampe avant (J/cm²) | | Mesures fluence sur lampe arrière (J/cm²) | |
|---|---|---|---|---|---|
| Mesure avec calorimètre Molectron® | Mesure avec calorimètre Gentec Solo2® | Mesure avec calorimètre Molectron® | Mesure avec calorimètre Gentec Solo2® | Mesure avec calorimètre Molectron® | Mesure avec calorimètre Gentec Solo2® |
| Tension nominale à 4750 V (sans mode simmer) | | | | | |
| 1,33 | 3,58 | 1,66 | 3,82 | 1,507 | 3,17 |
| 1,53 | 3,51 | | 3,73 | | 4,63 |
| 1,58 | 3,53 | | 3,77 | | |
| | 3,63 | | 4,69 | | |
| | 3,08 | | | | |
| | 2,04 | | | | |

| Tension nominale à 5000 V (sans mode simmer) | | | | | |
|---|---|---|---|---|---|
| 1,429 | 3,46 | 1,893 | 4,25 | 1,66 | 3,59 |

### Essais

**TABLEAU 3: Récapitulatif des essais**

| Essai | Type de pain | Contamination | Traitement / lumière |
|---|---|---|---|
| 1 comp | Pain de mie témoin | Oui | 2 flashs |
| 2 comp | Pain de mie témoin | Oui | Non |
| 3 comp | Pain de mie témoin | Non | 2 flashs |
| 4 comp | Pain de mie témoin | Non | Non |
| 5 | Pain de mie selon l'invention | Oui | 2 flashs |
| 6 | Pain de mie selon l'invention | Oui | Non |
| 7 | Pain de mie selon l'invention | Non | 2 flashs |
| 8 | Pain de mie selon l'invention | Non | Non |

### Observations lors des manipulations :

Les pains faits avec la recette selon l'invention sans conservateur chimique possèdent une surface de croûte légèrement plus foncée que celle des pains selon la recette témoin.

### Résultats des analyses microbiologiques :

Les pains, une fois traités, ont été envoyés pour analyse de 3 germes. Chaque emplacement sur le pain a été repéré avant analyse.

**Résultats obtenus**

| **Nom** | **Flore Aérobie Mésophile** | **Levures** | **Moisissures** |
|---|---|---|---|
| 1 | <2000 n/cm² | <10 n/cm² | 20 n/cm² |
| 2 | <2000 n/cm² | <10 n/cm² | 260 n/cm² |
| 3 | <2000 n/cm² | <10 n/cm² | <10 n/cm² |
| 4 | <2000 n/cm² | <10 n/cm² | <10 n/cm² |
| 5 | <2000 n/cm² | <10 n/cm² | 80 n/cm² |
| 6 | <2000 n/cm² | <10 n/cm² | 170 n/cm² |
| 7 | 2000 n/cm² | <10 n/cm² | <10 n/cm² |
| 8 | <2000 n/cm² | <10 n/cm² | 10 n/cm² |

### Constatations :

On ne constate pas de différence de contamination sur les produits non contaminés qu'ils aient été traités par la lumière pulsée ou non, le niveau de contamination de base étant inférieur aux limites de mesure.

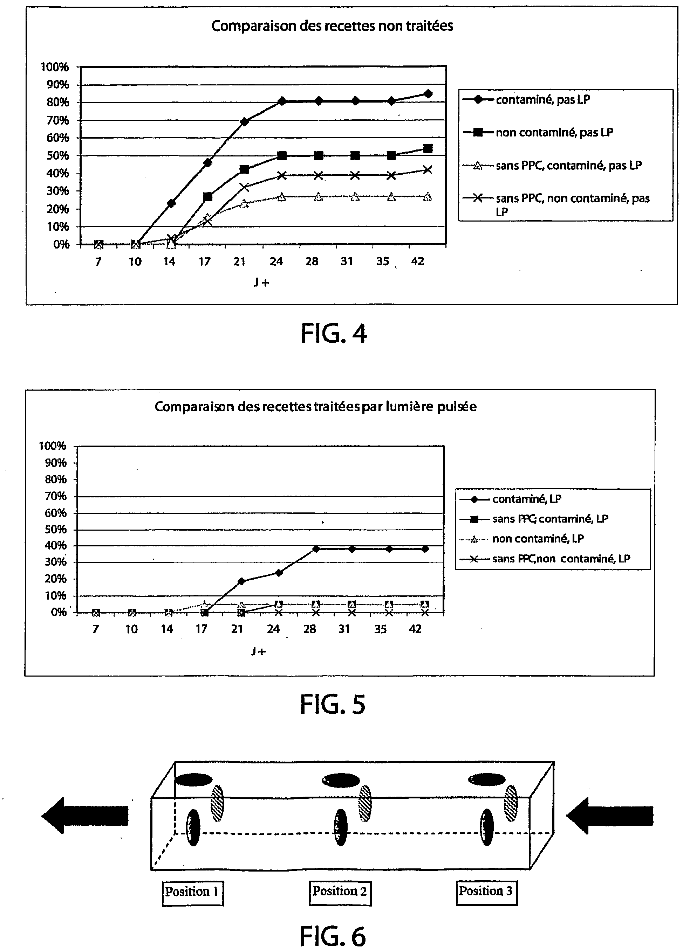

Sur les produits contaminés, on constate que la contamination par les moisissures selon l'invention est diminuée d'un facteur 2 par le traitement à la lumière pulsée.
Un test de validation biologique a été réalisé sur des pains faits avec la recette selon la présente invention et à l'aide d'un équipement de traitement par lumière pulsée, comprenant cette fois trois lampes, répondant aux conditions de traitement suivantes :
Tension : 4750 V
Cadence : 700ms (soit 2 flashs par pain)
Durée de l'impulsion lumineuse 450µs
Les trois lampes émettaient des flashs en cascade.
La validation biologique est réalisée de la manière suivante :
- dépôt des bio-indicateurs sur des supports sur les trois faces des pains de mie (avant, arrière, supérieure) et à trois niveaux différents sur la longueur du pain de mie,
- les pains de mie avec bio-indicateurs sont placés à l'entrée du tunnel de décontamination afin de subir le traitement par lumière pulsée,
- après traitement, les bio-indicateurs sont récupérés, placés dans des tubes stériles pour une analyse microbiologique.
La mesure consiste à détecter la présence de survivants dans des populations de germes cibles utilisés :
- *Aspergillus niger* IP 1431-93 à la concentration: 5,4 x 10⁴ spores par porte-germe
- *Bacillus atropheus (subtilis)* ATCC 9372 à la concentration: 1,1 x 10⁴ spores par porte-germe.
Positionnement des bio-indicateurs sur les pains de mie mesurant 63cm de longueur :
Les bio-indicateurs sont répartis le long des pains de mie à raison de trois bio-indicateurs par face (avant, arrière, haute). Les trois faces sont testées simultanément (test dynamiques). La figure 6 annexée montre les 3 positions des 9 bio-indicateurs déposés sur le pain de mie. Les flèches représentées sur cette figure 6 donnent le sens de passage à travers la zone de traitement.

### Résultats obtenus

**▪ Indicateurs biologiques Aspergillus niger IP 1431-83**

| Echantillons traités | | Nombre de spores/support | Témoins non traités | Nombres de spores /support | réduction |
|---|---|---|---|---|---|
| Face arrière | Position 1 | <1 | T1 | 2,8. 10⁴ | >4 log |
| | Position 2 | <1 | T2 | 2,7. 10⁴ | >4 log |
| | Position 3 | <1 | T3 | 3,2. 10⁴ | >4 log |
| Face supérieure | Position 1 | <1 | T4 | 2,1. 10⁴ | >4 log |
| | Position 2 | <1 | T5 | 2,6. 10⁴ | >4 log |
| | Position 3 | <1 | T6 | 2,0. 10⁴ | >4 log |
| Face avant | Position 1 | <1 | T7 | 2,2. 10⁴ | >4 log |
| | Position 2 | <1 | T8 | 2,4. 10⁴ | >4 log |
| | Position 3 | <1 | T9 | 3,2. 10⁴ | >4 log |

**▪ Indicateurs biologiques Bacillus atropheus (subtilis) ATCC 9372**

| Echantillons traités | | Nombre de spores/support | Témoins non traités | Nombres de spores /support | réduction |
|---|---|---|---|---|---|
| Face arrière | Position 1 | 1 | T1 | 1,1. 10⁴ | 4 log |
| | Position 2 | 1 | T2 | 8,4. 10⁴ | 4 log |
| | Position 3 | <1 | T3 | 1,1. 10⁴ | 4 log |
| Face supérieure | Position 1 | 4,8. 10¹ | T4 | 1,2. 10⁴ | 2,37 log |
| | Position 2 | <1 | T5 | 1,2. 10⁴ | 4 log |
| | Position 3 | <1 | T6 | 1,2. 10⁴ | 4 log |
| Face avant | Position 1 | 1 | T7 | 1,4. 10⁴ | 4 log |
| | Position 2 | <1 | T8 | 1,1. 10⁴ | 4 log |
| | Position 3 | <1 | T9 | 1,1. 10⁴ | 4 log |

### Constatations

Ces tests dynamiques montrent une bonne efficacité de traitement de décontamination à la lumière pulsée. En effet, ce traitement permet d'atteindre une réduction logarithmique de 3 à 4 log sur les populations *Bacillus atropheus (subtilis)* (ATCC 9372) et *Aspergillus niger* (IP 1431-83).

### Résultats des suivis de conservation :

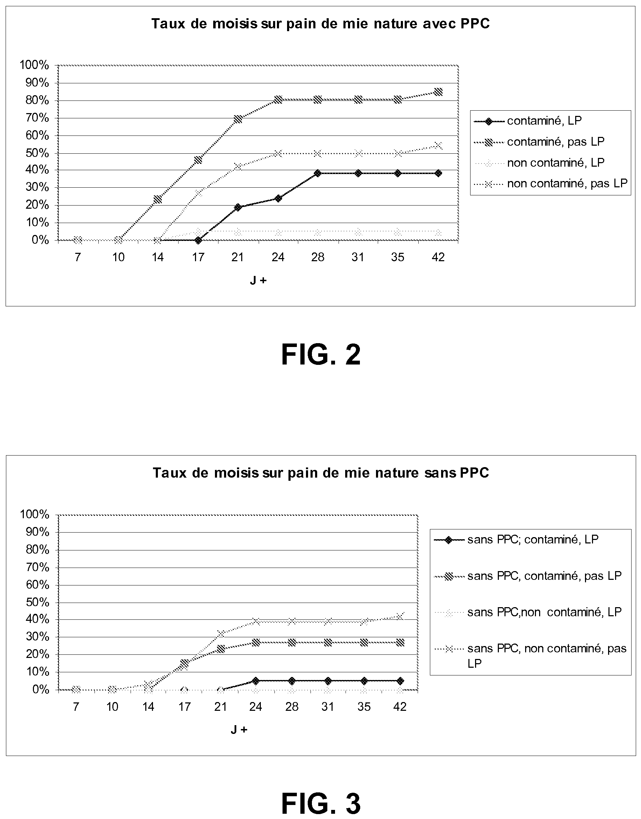

La figure2 donne la courbe du pourcentage de pains de mie témoin ayant moisi au cours du temps, comparaison de produits témoins et traités par 2 flashs de lumière pulsée (LP). On constate sur cette figure 2, que les pains de mie témoin contaminés traités par lumière pulsée développent des moisissures une semaine plus tard que les produits non traités. Ces produits présentent un taux de moisi d'environ 40% qui est stable dès J+28. Les produits non traités moisissent dès J+10, ne stabilisent pas leur taux de moisis avant J+24 et présentent un taux final de moisis de près de 90%, soit 2 fois plus élevé que les produits traités par lumière pulsée. On constate aussi que les pains de mie témoin non contaminés traités par lumière pulsée ne développent qu'un taux très faible de 5% de moisis obtenu à J +17. Les produits non contaminés, non traités moisissent à la même date mais pour obtenir un taux final de moisis d'environ 50% soit 10 fois plus élevé que les produits traités par lumière pulsée.

La figure 3 donne la courbe du pourcentage de pains de mie selon l'invention sans PPC ayant moisi au cours du temps, comparaison de produits témoins et traités par 2 flashs de lumière pulsée (LP). On constate sur la figure 3, que les pains de mie selon l'invention sans PPC contaminés non traités développent un taux de moisis d'environ 30% à J+24. Après traitement, on constate une diminution du taux de moisis pour atteindre 5%. Les pains de mie selon l'invention sans PPC non contaminés non traités développent un taux de moisis d'environ 40% à J+24. Après traitement, on ne constate pas d'apparition de produits moisis.

La figure 4 donne la courbe du pourcentage de pains de mie froment non traités ayant moisi au cours du temps, comparaison de pains de mie témoins et de pains de mie selon l'invention sans PPC. On constate, sur la figure 4, que les pains de mie selon l'invention sans PPC qu'ils aient été contaminés ou non moisissent moins rapidement que les pains de mie témoins contenant du PPC.

La figure 5 donne la courbe du pourcentage de pains de mie traités par lumière pulsée (LP) ayant moisi au cours du temps, comparaison de pains de mie témoins avec PPC et de pains de mie selon l'invention sans PPC. On constate sur la figure 5 que les pains de mie témoins contenant du PPC contaminés et traités par la lumière pulsée sont moisis à 40% après 28 jours. Les pains de mie selon l'invention sans PPC contaminés ayant été traités présentent un taux de moisis de moins de 5%. Pour des produits non contaminés, les pains de mie témoins contenant du PPC moisissent à un taux de 5% tandis que les pains de mie selon l'invention sans PPC ne moisissent pas.

### Conclusion :

D'après les résultats ci-dessus, on peut conclure que les pains de mie selon l'invention ne contenant pas de conservateur chimique ajouté de la gamme E200, par exemple le PPC moisissent moins que les pains de mie témoins en contenant, qu'ils soient contaminés ou non. De plus, le traitement à la lumière pulsée est plus efficace sur les pains de mie selon l'invention que sur des pains de mie témoins avec PPC.

Le procédé selon l'invention est simple et économique à mettre en oeuvre en milieu industriel et permet d'obtenir des produits de boulangerie, en particulier des pains de mie ou analogues, cuits et décontaminés de sorte que leur DLUO est très significativement augmentée, de préférence sans utiliser de conservateur chimique ajouté de la gamme E200, et tout en présentant un aspect attirant et des qualités organoleptiques comparables aux produits de boulangerie classiques.

## Revendications

1. Procédé industriel de fabrication de produits de boulangerie décontaminés, en particulier de pains de mie ou analogues, **caractérisé en ce qu'**il comprend les étapes essentielles suivantes, de préférence successives:
(1) Préparation d'une pâte en mélangeant notamment les ingrédients suivants, en absence d'un conservateur de la gamme E200 :
A. Farine;
B. eau;
C. éventuellement matière(s) grasse(s) ajoutée(s);
D. au moins un agent de fermentation;
E. NaCl;
F. éventuellement sucre(s);
G. au moins un agent de charge choisi parmi les mono et/ou oligosaccharides hydrogénés, de préférence dans le groupe comprenant : le sorbitol, le mannitol, le xylitol, l'érythritol, le maltitol, le lactitol, l'isomaltulose hydrogéné et leurs mélanges, le maltitol étant préféré;
H. au moins un améliorant de panification comprenant un acide et/ou sel d'acide et de la gluconodelta-lactone (GDL), ledit acide et/ou sel d'acide étant choisi dans le groupe comprenant les préferments acides, de préférence dans le sous-groupe comprenant les levains secs, les levains pâteux ou les levains liquides et leurs mélanges;
I. éventuellement au moins un mélange hyposodé de minéraux, de préférence issu du lait;
J. éventuellement un ou plusieurs additifs;
(2) Mise en forme de cette pâte, de préférence à l'aide d'un moule;
(3) Fermentation de cette pâte ainsi préparée;
(4) Cuisson au moins partielle de cette pâte mise en forme ;
(5) Eventuel refroidissement du pain;
(6) Décontamination du pain par traitement au moyen de lumière pulsée;
(7) Eventuel tranchage du pain ;
(8) Conditionnement, de préférence en sachets.

2. Procédé selon la revendication 1 **caractérisé en ce que**, lors de l'étape 1, on met en oeuvre au moins l'une des caractéristiques quantitatives suivantes (les % donnés étant des % du boulanger : % en poids par rapport au poids de farine A):
**i.** 0 ≤ C ≤ 30, de préférence 1 ≤ C ≤ 25; et mieux encore 2 ≤ C ≤ 20;
**ii.** 0,1 ≤ G ≤ 10, de préférence 1 ≤ G ≤ 5; et mieux encore 2 ≤ G ≤ 4;
**iii.** 0,05 ≤ H ≤ 5, de préférence 0,1 ≤ H ≤ 4; et mieux encore 1 ≤ H ≤ 4;
**iv.** 0,05 ≤ I ≤ 5, de préférence 0,1 ≤ I ≤ 4; et mieux encore 0,15 ≤ I ≤ 3.

3. Procédé selon la revendication 1 ou 2 **caractérisé en ce que** la ou les matière(s) grasse(s) ajoutée(s) C sont choisies dans le groupe comprenant l'huile de colza, l'huile de soja, le shortening, l'huile de palme, le beurre, la margarine et leurs mélanges.

4. Procédé selon l'une quelconque des revendications 1 à 3 **caractérisé en ce que** le mélange I hyposodé de minéraux, de préférence issu du lait, se compose comme suit :
| | |
|---|---|
| Protéines % | 10-15 |
| Cendres % | 80-88 |
| Minéraux | g/100g |
| Na | 8-12 |
| K | 27-30 |
| C1 | 40-45 |
| Ca | 2-3 |
| Mg | 0,2-0,4 |
| Humidité % | 3-5 |
| Lactose % | 5-10 |

5. Procédé selon l'une quelconque des revendications 1 à 4 **caractérisé en ce que** le ou les additifs J est (sont) choisi(s) parmi les additifs d'amélioration du moelleux (de préférence émulsifiants, épaississants, hydrocolloïdes) les agents stabilisants; les additifs technologiques [de préférence les oxydants, les enzymes (avantageusement l'alpha amylase), les farines de céréales ou autres ingrédients caractéristiques de la composition de pains spéciaux, les agents réducteurs], les additifs de conservation microbiologique dans le groupe comprenant : l'acide ascorbique, la L-cystéine ou la levure désactivée, et leur mélanges.

6. Procédé selon l'une quelconque des revendications précédentes **caractérisé en ce qu'**il est prévu une étape (3) de fermentation de la pâte, ladite fermentation étant activée par exposition de la pâte à une source de micro-ondes, avec une puissance d'émission telle que l'élévation de température induite au coeur de la pâte soit inférieure ou égale à la température d'inactivation de la levure, la température induite au coeur de la pâte pour cette activation aux micro-ondes étant de préférence, comprise entre 30°C et 50 °C, et, plus préférentiellement encore entre 36 et 42 °C, l'hygrométrie étant quant elle de préférence comprise entre 60 et 99% HRE (Hygrométrie relative d'équilibre), et, plus préférentiellement encore entre 70 et 95 % HRE.

7. Procédé selon l'une quelconque des revendications précédentes **caractérisé en ce qu'**il est prévu une étape (5) de refroidissement du pain par laquelle la température du pain est amenée à 40°C au plus, de préférence à 20°C au plus.

8. Procédé selon l'une quelconque des revendications précédentes **caractérisé en ce que**, lors de l'étape (6) de décontamination du pain par traitement au moyen de lumière pulsée, on soumet chaque pain à au moins un flash, de préférence un ou deux, produits par une ou plusieurs lampes, de telle sorte que le niveau d'énergie reçu par le pain, soit supérieur ou égal à 0,5 J/cm², de préférence à 0,7 J/cm², et, plus préférentiellement encore, soit supérieur ou égal à 0,8 J/cm² et inférieur à 3,0 J/cm² et, mieux encore soit supérieur ou égal à 0,8 J/cm² et inférieur à 2,5, voire à 2,0 J/cm² .

9. Procédé selon la revendication 8 **caractérisé en ce que** le pain repose sur un support transparent à la lumière du ou des flashs, lorsqu'il est soumis au(x)dit(s) flash(s), et **en ce que** tout ou partie des lampes prévues sont disposées à moins de 10 cm, de préférence moins de 5 cm du pain.

10. Procédé selon la revendication 8 ou 9 **caractérisé en ce que** les pains traités à l'étape (6) circulent sur des moyens de convoyage et **en ce que** l'on fait en sorte qu'au moins l'une des dispositions suivantes soient mises en oeuvre pour l'étape (6):
→ l'espacement entre deux pains successifs est suffisant pour permettre aux lampes, après la production d'un ou plusieurs flashs pour un pain donné, d'être à nouveau opérationnelles pour la production d'un ou plusieurs flashs pour le pain suivant,
→ les pains sont tous positionnés sensiblement de la même façon par rapport aux lampes lorsqu'ils sont soumis au(x) flash(s).

11. Produit de boulangerie industriel décontaminé, en particulier un pain de mie ou analogue, de préférence obtenu par le procédé selon l'une des revendications 1 à 10, caractérisé :
∘ en ce qu'il est exempt de conservateur(s) de la gamme E200,
∘ et en ce que sa DLUO est supérieure ou égale à 20 jours, de préférence à 30 jours.
∘ en ce qu'il comprend au moins un agent de charge choisi parmi les mono et/ou oligosaccharides hydrogénés, de préférence dans le groupe comprenant : le sorbitol, le mannitol, le xylitol, l'érythritol, le maltitol, le lactitol, l'isomaltulose hydrogéné et leurs mélanges, le maltitol étant préféré et au moins un améliorant de panification comprenant un acide et/ou sel d'acide et de la gluconodelta-lactone (GDL), ledit acide et/ou sel d'acide étant choisi dans le groupe comprenant les préferments acides, de préférence dans le sous-groupe comprenant les levains secs, les levains pâteux ou les levains liquides et leurs mélanges,
∘ et en ce qu'il est décontaminé par traitement au moyen de lumière pulsée.

12. Produit de boulangerie selon la revendication 11 **caractérisé en ce qu'**il présente au moins l'une des caractéristiques microbiologiques CM1 à CM8 données dans le tableau ci-après:
| Caractéristiques Microbiologiques | Type de germe | Taux maximal admis | Méthode d'analyse |
|---|---|---|---|
| CM1 | Flore mésophile totale | ≤10⁵ UFC/g | NF V 08-100-01/01 |
| CM2 | E. Coli | ≤10 UFC/g | NF V08/053 |
| CM3 | Coliformes thermo tolérants | ≤10 UFC/g | NF V 08-060- 03/96 |
| CM4 | Staphylocoques aureus | ≤100 UFC/g | NF V 08-057-1-01/04 |
| CM5 | Levures | ≤500 UFC/g | NF V08-036-05/03 |
| CM6 | Moisissures | ≤500 UFC/g | NFV08-036-05/03 |
| CM7 | Pichia anomala | ≤100 UFC/g | Identification avec galeries Vitek/Api puis NF V08-036-05/03 |
| CM8 | Salmonelles | Absence dans 25g | SMS AES 10/4-05/04 |

13. Produit de boulangerie selon la revendication 11 ou 12 **caractérisé en ce qu'**il comprend les ingrédients suivants:
A. farine;
B. eau;
C. éventuellement matière(s) grasse(s) ajoutée(s);
D. au moins un agent de fermentation;
E. NaCl;
F. éventuellement sucre(s);
G. au moins un agent de charge choisi parmi les mono et/ou oligosaccharides hydrogénés, de préférence dans le groupe comprenant : le sorbitol, le mannitol, le xylitol, l'érythritol, le maltitol, le lactitol, l'isomaltulose hydrogéné et leurs mélanges, le maltitol étant préféré;
H. au moins un améliorant de panification comprenant un acide et/ou sel d'acide et de la gluconodelta-lactone (GDL), ledit acide et/ou sel d'acide étant choisi dans le groupe comprenant les préferments acides, de préférence dans le sous-groupe comprenant les levains secs, les levains pâteux ou les levains liquides et leurs mélanges;
I. éventuellement au moins un mélange hyposodé de minéraux, de préférence issu du lait ;
J. éventuellement un ou plusieurs additifs.

## Patentansprüche

1. Industrielles Verfahren zur Herstellung von dekontaminierten Bäckereiprodukten, insbesondere von Toastbrot, oder ähnlichem, **dadurch gekennzeichnet, dass** es die folgenden, vorzugsweise aufeinanderfolgenden, Hauptschritte umfasst:
(1) Herstellen eines Teigs durch Mischen, insbesondere der folgenden Bestandteile, in Abwesenheit eines Konservierungsstoffs der Reihe E200:
A. Mehl;
B. Wasser;
C. gegebenenfalls Fettzusatzstoff(e);
D. mindestens ein Fermentationsmittel;
E. NaCl;
F. gegebenenfalls Zucker(stoffe);
G. mindestens einen Füllstoff ausgewählt aus hydrierten Mono- und/oder Oligosacchariden, vorzugsweise aus der Gruppe umfassend: Sorbit, Mannit, Xylit, Erythrit, Maltit, Lactit, hydrierte Isomaltulose und ihre Gemische, wobei Maltit bevorzugt ist;
H. mindestens ein Brotverbesserungsmittel, umfassend eine Säure und/oder ein Säure-Salz und Glucono-delta-lacton (GDL), wobei die Säure und/oder das Säure-Salz aus der Gruppe ausgewählt ist, umfassend saure Vorteige, vorzugsweise aus der Untergruppe umfassend Trockensauerteige, pastöse Sauerteige, Flüssigsauerteige und ihre Gemische;
I. gegebenenfalls mindestens ein salzarmes Mineraliengemisch, vorzugsweise aus Milch;
J. gegebenenfalls einen oder mehrere Zusatzstoffe;
(2) Formen dieses Teigs, vorzugsweise mit Hilfe einer Form;
(3) Fermentation dieses so hergestellten Teigs;
(4) Mindestens teilweises Backen dieses geformten Teigs;
(5) Optionales Abkühlen des Brots;
(6) Dekontamination des Brots durch Behandlung mittels gepulstem Licht;
(7) Optionales Aufschneiden des Brots;
(8) Verpacken, vorzugsweise in Beuteln.

2. Verfahren nach Anspruch 1, **dadurch gekennzeichnet, dass**, während Schritt 1, mindestens eine der folgenden Mengencharakteristiken verwendet wird (wobei die angegebenen % die Back-% : Gew.-% bezüglich Gewicht von Mehl A darstellen):
i. 0 ≤ C ≤ 30, vorzugsweise 1 ≤ C ≤ 25; und besser noch 2 ≤ C ≤ 20;
ii. 0,1 ≤ G ≤ 10, vorzugsweise 1≤ G ≤ 5; und besser noch 2 ≤ G ≤ 4;
iii. 0,05 ≤ H ≤ 5, vorzugsweise 0,1 ≤ H ≤ 4; und besser noch 1 ≤ H ≤ 4;
iv. 0,05 ≤ I ≤ 5, vorzugsweise 0,1 ≤ I ≤ 4; und besser noch 0,15 ≤ I ≤ 3.

3. Verfahren nach Anspruch 1 oder 2, **dadurch gekennzeichnet, dass** der oder die Fettzusatzstoff(e) C aus der Gruppe ausgewählt sind umfassend Colzaöl, Sojaöl, Backfett, Palmöl, Butter, Margarine und ihre Gemische.

4. Verfahren nach einem der Ansprüche 1 bis 3, **dadurch gekennzeichnet, dass** das salzarme Mineraliengemisch, vorzugsweise aus Milch, sich wie folgt zusammensetzt:
| | |
|---|---|
| Proteine % | 10-15 |
| Asche % | 80-88 |
| Mineralstoffe | g/100g |
| Na | 8-12 |
| K | 27-30 |
| Cl | 40-45 |
| Ca | 2-3 |
| Mg | 0,2-0,4 |
| Feuchtigkeit % | 3-5 |
| Lactose % | 5-10 |

5. Verfahren nach einem der Ansprüche 1 bis 4, **dadurch gekennzeichnet, dass** der oder die Zusatzstoffe J ausgewählt sind aus Weichheitsverbesserungsmitteln (vorzugsweise Emulgatoren, Verdickungsmitteln, Hydrocolloiden); Stabilisatoren; technologischen Zusatzstoffen [vorzugsweise Oxidationsmitteln, Enzymen, (vorteilhafterweise alpha-Amylase), Getreidemehlen oder anderen charakteristischen Bestandteilen der Zusammensetzung für Spezialbrote, Reduktionsmitteln], mikrobiologischen Konservierungsstoffen aus der Gruppe umfassend: Ascorbinsäure, L-Cystein oder deaktivierte Hefe, und ihren Gemischen.

6. Verfahren nach einem der vorangehenden Ansprüche, **dadurch gekennzeichnet, dass** ein Schritt (3) zur Fermentation des Teigs vorgesehen ist, wobei die Fermentation durch Exposition des Teigs gegenüber einer Mikrowellenquelle mit einer Sendeleistung aktiviert wird, derart dass der innerhalb des Teigs ausgelöste Temperaturanstieg kleiner oder gleich der Inaktivierungstemperatur der Hefe ist, wobei die innerhalb des Teigs für diese Mikrowellen-Aktivierung ausgelöste Temperatur vorzugsweise, zwischen 30°C und 50°C, und noch mehr bevorzugt zwischen 36 und 42°C liegt, wobei die Feuchtigkeit diesbezüglich vorzugsweise zwischen 60 und 99 % HRE (relative Gleichgewichtsfeuchtigkeit), und noch mehr bevorzugt zwischen 70 und 95 % HRE liegt.

7. Verfahren nach einem der vorangehenden Ansprüche, **dadurch gekennzeichnet, dass** ein Schritt (5) zur Abkühlung des Brots vorgesehen ist, durch den die Temperatur des Brots auf höchstens 40°C, vorzugsweise auf höchstens 20 °C gebracht wird.

8. Verfahren nach einem der vorangehenden Ansprüche, **dadurch gekennzeichnet, dass** während des Schritts (6) zur Dekontamination des Brots durch Behandlung mittels gepulstem Licht das Brot jeweils mindestens einem Blitz, vorzugsweise einem oder zwei Blitzen, unterzogen wird, die durch eine oder mehrere Lampen erzeugt werden, derart, dass das durch das Brot aufgenommene Energieniveau größer oder gleich 0,5 J/cm², vorzugsweise größer oder gleich 0,7 J/cm², und noch mehr bevorzugt größer oder gleich 0,8 J/cm² und kleiner als 3,0 J/cm² und, besser noch, größer oder gleich 0,8 J/cm² und kleiner als 2,5, sogar 2,0 J/cm² ist.

9. Verfahren nach Anspruch 8, **dadurch gekennzeichnet, dass** das Brot auf einen lichtdurchlässigen Träger für den oder die Blitze ruht, wenn es dem (den) Blitz(en) ausgesetzt wird, und dadurch, dass alle oder ein Teil der vorgesehenen Lampen weniger als 10 cm, vorzugsweise weniger als 5 cm vom Brot angeordnet sind.

10. Verfahren nach Anspruch 8 oder 9, **dadurch gekennzeichnet, dass** die in Schritt (6) behandelten Brote auf Fördereinrichtungen zirkulieren und dadurch, dass veranlasst wird, dass mindestens eine der folgenden Vorkehrungen für Schritt (6) realisiert ist:
- der Abstand zwischen zwei aufeinanderfolgenden Broten reicht aus, um zu ermöglichen, dass die Lampen nach der Erzeugung von einem oder mehreren Blitzen für ein gegebenes Brot erneut einsatzbereit sind zur Erzeugung von einem oder mehreren Blitzen für das nachfolgende Brot,
- die Brote sind immer im Wesentlichen in der gleichen Art bezüglich der Lampen angeordnet, wenn sie dem (den) Blitz(en) ausgesetzt sind.

11. Dekontaminiertes industrielles Bäckereiprodukt, insbesondere ein Toastbrot oder ähnliches, das vorzugsweise durch das Verfahren nach einem der Ansprüche 1 bis 10 erhalten wird, **gekennzeichnet:**
- **dadurch, dass** es frei ist von Konservierungsstoff(en) der Sorte E200,
- und dadurch, dass sein MHD größer oder gleich 20 Tage ist, vorzugsweise 30 Tage beträgt,
- dadurch, dass es mindestens einen Füllstoff umfasst, ausgewählt aus hydrierten Mono- und/oder Oligosacchariden, vorzugsweise aus der Gruppe umfassend: Sorbit, Mannit, Xylit, Erythrit, Maltit, Lactit, hydrierte Isomaltulose und ihre Gemische, wobei Maltit bevorzugt ist, und mindestens einem Brotverbesserungsmittel umfassend eine Säure und/oder ein Säure-Salz und Glucono-delta-lacton (GDL), wobei die Säure und/oder das Säure-Salz aus der Gruppe ausgewählt ist, umfassend saure Vorteige, vorzugsweise aus der Untergruppe umfassend Trockensauerteige, pastöse Sauerteige, Flüssigsauerteige und ihre Gemische,
- und dadurch, dass es durch Behandlung mittels gepulstem Licht dekontaminiert wird.

12. Bäckereiprodukt nach Anspruch 11, **dadurch gekennzeichnet, dass** es mindestens eine der in der folgenden Tabelle angegebenen mikrobiologischen Charakteristiken CM1 bis CM8 aufweist:
| Mikrobiologische Charakteristiken | Bakterientyp | Maximal zulässiger Gehalt | Analyseverfahren |
|---|---|---|---|
| CM1 | Gesamte mesophile Flora | ≤10⁵ UFC/g | NF V 08-100-01/01 |
| CM2 | E. coli | ≤10 UFC/g | NF V08/053 |
| CM3 | Wärmetolerante coliforme Bakterien | ≤10 UFC/g | NF V 08-060-03/96 |
| CM4 | Staphylococcus aureus | ≤100 UFC/g | NF V 08-057-1-01/04 |
| CM5 | Hefen | ≤500 UFC/g | NF V08-036-05/03 |
| CM6 | Schimmelpilze | ≤500 UFC/g | NFV08-036-05/03 |
| CM7 | Pichia anomala | ≤100 UFC/g | Identifikation mit Vitek/Api-Galerien, dann NF V08-05/03 |
| CM8 | Salmonellen | Fehlt in 25 g | SMS AES 10/4-05/04 |

13. Bäckereiprodukt nach Anspruch 11 oder 12, **dadurch gekennzeichnet, dass** es die folgenden Bestandteile aufweist:
A. Mehl;
B. Wasser;
C. gegebenenfalls Fettzusatzstoff(e);
D. mindestens ein Fermentationsmittel;
E. NaCl;
F. gegebenenfalls Zucker(stoffe);
G. mindestens einen Füllstoff, ausgewählt aus hydrierten Mono- und/oder Oligosacchariden, vorzugsweise aus der Gruppe umfassend:
Sorbit, Mannit, Xylit, Erythrit, Maltit, Lactit, hydrierte Isomaltulose und ihre Gemische, wobei Maltit bevorzugt ist;
H. mindestens ein Brotverbesserungsmittel umfassend eine Säure und/oder Säure-Salz und Glucono-delta-lacton (GDL), wobei die Säure und/oder das Säure-Salz aus der Gruppe ausgewählt sind, umfassend umfassend saure Vorteige, vorzugsweise aus der Untergruppe umfassend Trockensauerteige, pastöse Sauerteige, Flüssigsauerteige, und ihre Gemische;
I. gegebenenfalls mindestens ein salzarmes Mineraliengemisch, vorzugsweise aus Milch;
J. gegebenenfalls einen oder mehrere Zusatzstoffe.

## Claims

1. An industrial method for producing decontaminated bakery products, in particular sandwich breads or the like, **characterized in that** it comprises the following essential, preferably consecutive, steps:
(1) Preparing a dough by mixing in particular the following ingredients:
A. flour;
B. water;
C. optionally, added fat(s);
D. at least one fermentation agent;
E. NaCl;
F. optionally, sugar(s);
G. at least one filler chosen from hydrogenated monosaccharides and/or oligosaccharides, preferably from the group comprising: hydrogenated isomaltulose, lactitol, maltitol, erythritol, xylitol, mannitol, sorbitol, and mixtures thereof, maltitol being preferred;
H. at least one breadmaking improver comprising an acid and/or acid salt and glucono-delta-lactone (GDL) that the acid and/or acid salt of the breadmaking improver H is chosen from the group comprising acid preferments, preferably from the subgroup comprising dry leavens, pasty leavens or liquid leavens and mixtures thereof;
I. optionally, at least one low-sodium mixture of minerals, preferably derived from milk;
J. optionally, one or more additives;
(2) Shaping said dough, preferably using a mold;
(3) Fermenting said dough thus prepared;
(4) At least partially baking said dough thus shaped;
(5) Optionally cooling the bread;
(6) Decontaminating the bread by pulsed-light treatment;
(7) Optionally slicing the bread;
(8) Packaging, preferably into bags.

2. The method as claimed in claim 1, **characterized in that**, during step 1, at least one of the following quantitative characteristics is used (the % data being baker's %: % by weight relative to the weight of flour A):
**i.** 0 ≤ C ≤ 30, preferably 1 ≤ C ≤ 25; and better still 2 ≤ C ≤ 20;
**ii.** 0.1 ≤ G ≤ 10, preferably 1 ≤ G ≤ 5; and better still 2 ≤ G ≤ 4;
**iii.** 0.05 ≤ H ≤ 5, preferably 0.1 ≤ H ≤ 4; and better still 1 ≤ H ≤ 4;
**iv.** 0.05 ≤ I ≤ 5, preferably 0.1 ≤ I ≤ 4; and better still 0.15 ≤ I ≤ 3.

3. The method as claimed in claim 1 or 2, **characterized in that** the added fat(s) C is (are) chosen from the group comprising rapeseed oil, soya oil, shortening, palm oil, butter, margarine and mixtures thereof.

4. The method as claimed in any one of claims 1 to 3, **characterized in that** the low-sodium mixture I of minerals, preferably derived from milk, is composed as follows:
| | |
|---|---|
| % proteins | 10-15 |
| % ash | 80-88 |
| Minerals | g/100 g |
| Na | 8-12 |
| K | 27-30 |
| Cl | 40-45 |
| Ca | 2-3 |
| Mg | 0.2-0.4 |
| % moisture | 3-5 |
| % lactose | 5-10 |

5. The method as claimed in any one of claims 1 to 4, **characterized in that** the additive(s) J is (are) chosen from additives for improving the softness (preferably emulsifiers, thickeners, hydrocolloids), stabilizers; technological additives [preferably oxidants, enzymes (advantageously, alpha-amylase), cereal flours or other ingredients characteristic of the composition of special breads, reducing agents], microbiological preservation additives from the group comprising: ascorbic acid, L-cysteine or deactivated yeast, and mixtures thereof.

6. The method as claimed in any one of the preceding claims, **characterized in that** a step (3) of fermentation of the dough is envisioned, said fermentation being activated by exposure of the dough to a source of microwaves, with an emission power such that the increase in temperature induced at the heart of the dough is less than or equal to the yeast inactivation temperature, the temperature induced at the heart of the dough for this microwave activation preferably being between 30°C and 50°C, and even more preferably between 36 and 42°C, the humidity being such that it is preferably between 60% and 99% ERH (equilibrium relative humidity) and even more preferably between 70% and 95% ERH.

7. The method as claimed in any one of the preceding claims, **characterized in that** a step (5) is envisioned for cooling the bread, via which the temperature of the bread is brought to at most 40°C, preferably at most 20°C.

8. The method as claimed in any one of the preceding claims, **characterized in that**, in step (6) of decontaminating the bread by pulsed-light treatment, each bread is subjected to at least one flash, preferably one or two, produced by one or more lamps, such that the level of energy received by the bread is greater than or equal to 0.5 J/cm², preferably greater than or equal to 0.7 J/cm², and even more preferably is greater than or equal to 0.8 J/cm² and less than 3.0 J/cm², or even better either greater than or equal to 9,8 J/cm² and less than 2,5, even 2,0 J/cm².

9. The method as claimed in claim 8, **characterized in that** the bread lies on a support which is transparent to the light of the flash (es), when it is subjected to said flash (es), and **in that** all or part of the lamps envisioned are placed less than 10 cm, preferably less than 5 cm, from the bread.

10. The method as claimed in claim 8 or 9, **characterized in that** the breads treated in step (6) circulate on conveying means and **in that** the process is carried out in such a way that at least one of the following arrangements is implemented for step (6):
→ the space between two successive breads is sufficient to enable the lamps, after the production of one or more flashes for a given bread, to be once again operational for the production of one or more flashes for the following bread,
→ the breads are all positioned in substantially the same way relative to the lamps when they are subjected to the flash(es).

11. A decontaminated factory-produced bakery product, in particular a sandwich bread or the like, preferably obtained by means of the method as claimed in one of claims 1 to 10, characterized:
o in that it is free of preservative(s) of the E200 range,
o and in that its BBD is greater than or equal to 20 days, preferably greater than or equal to 30 days.
o it comprises at least one filler chosen from hydrogenated monosaccharides and/or oligosaccharides, preferably from the group comprising: hydrogenated isomaltulose, lactitol, maltitol, erythritol, xylitol, mannitol, sorbitol and mixtures thereof, maltitol being preferred, and at least one breadmaking improver comprising an acid and/or acid salt and glucono-delta-lactone (GDL), said acid and/or acid salt being chosen from the group comprising acid preferments, preferably from the subgroup comprising dry leavens, pasty leavens or liquid leavens and mixtures thereof;
o and in that it is decontaminated by pulsed-light treatment.

12. The bakery product according to claim 11, **characterized in that** it has at least one of the microbiological characteristics MC1 to MC8 given in the table hereinafter:
| Microbiological characteristics | Type of microorganism | Maximum level accepted | Method of analysis |
|---|---|---|---|
| MC1 | Total mesophilic flora | ≤ 10⁵ CFU/g | NF V 08-100-01/01 |
| MC2 | E. coli | ≤ 10 CFU/g | NF V 08/053 |
| MC3 | Thermotolerant coliforms | ≤ 10 CFU/g | NF V 08-060-03/96 |
| MC4 | Staphylococcus aureus | ≤ 100 CFU/g | NF V 08-057-1-01/04 |
| MC5 | Yeasts | ≤ 500 CFU/g | NF V 08-036-05/03 |
| MC6 | Molds | ≤ 500 CFU/g | NF V 08-036-05/03 |
| MC7 | Pichia anomala | ≤ 100 CFU/g | Identification with Vitek/Api strips then NF V08-036-05/03 |
| MC8 | Salmonellae | Absence in 25 g | SMS AES 10/4-05/04 |

13. The bakery product as claimed in claims 11 or 12, **characterized in that** it comprises the following ingredients:
A. flour;
B. water;
C. optionally, added fat(s);
D. at least one fermentation agent;
E. NaCl;
F. optionally, sugar(s);
G. at least one filler chosen from hydrogenated monosaccharides and/or oligosaccharides, preferably from the group comprising: hydrogenated isomaltulose, lactitol, maltitol, erythritol, xylitol, mannitol, sorbitol and mixtures thereof, maltitol being preferred;
H. at least one breadmaking improver comprising an acid and/or acid salt and glucono-delta-lactone (GDL);
I. optionally, at least one low-sodium mixture of minerals, preferably derived from milk;
J. optionally, one or more additives.
